(19) **Europäisches Patentamt**
**European Patent Office**
**Office européen des brevets**

(11) **EP 4 535 226 B1**

(12) **EUROPEAN PATENT SPECIFICATION**

(45) Date of publication and mention
of the grant of the patent:
**15.07.2026 Bulletin 2026/29**

(21) Application number: **24204619.1**

(22) Date of filing: **04.10.2024**

(51) International Patent Classification (IPC):
**G06K 15/02** *(2006.01)* **B41J 2/205** *(2006.01)*
**B41J 19/14** *(2006.01)* **H04N 1/405** *(2006.01)*

(52) Cooperative Patent Classification (CPC):
**G06K 15/1881; B41J 2/2054; B41J 19/142;
H04N 1/405**

(54) **PRINTING APPARATUS AND METHOD OF CONTROLLING PRINTING APPARATUS**

DRUCKVORRICHTUNG UND VERFAHREN ZUR STEUERUNG DER DRUCKVORRICHTUNG

APPAREIL D'IMPRESSION ET PROCÉDÉ DE COMMANDE D'APPAREIL D'IMPRESSION

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **06.10.2023 JP 2023174629
06.10.2023 JP 2023174630
26.09.2024 JP 2024167830**

(43) Date of publication of application:
**09.04.2025 Bulletin 2025/15**

(73) Proprietor: **CANON KABUSHIKI KAISHA
Tokyo 146-8501 (JP)**

(72) Inventors:
• **MORITA, Yuki
Tokyo (JP)**

• **WADA, Satoshi
Tokyo (JP)**
• **NISHIOKA, Shingo
Tokyo (JP)**
• **YASUDA, Ayumi
Tokyo (JP)**
• **BABA, Naoko
Tokyo (JP)**
• **OTANI, Takumi
Tokyo (JP)**

(74) Representative: **WESER & Kollegen
Patentanwälte PartmbB
Radeckestraße 43
81245 München (DE)**

(56) References cited:
**EP-A2- 1 710 086        JP-A- 2022 038 519
US-A1- 2008 123 148    US-A1- 2008 180 475**

**Description**

BACKGROUND OF THE INVENTION

Field of the Invention

The present invention relates to a printing technique for forming dots on a printing medium by repeating forward scanning and backward scanning.

Description of the Related Art

Printing apparatuses that print an image by repeating print scanning, in which a print head having an ejection port array in which a plurality of ejection ports for ejecting ink are arranged is caused to move relatively to a unit region on a printing medium while ejecting ink, and conveyance of a printing medium in a direction perpendicular to print scanning are known. A so-called multi-pass printing method in which, in such printing apparatuses, an image is formed by performing a plurality of scans for a unit region is known. In such a multi-pass printing method, in general print data to be used for printing is generated by quantizing multi-value data corresponding to an image to be printed to generate quantized data and then distributing the quantized data to a plurality of scans.

Japanese Patent No. 4519876 mentions that when distributing an image generated using a quantization pattern across a plurality of scans and printing the image, printing substantially the same amount of image data in each pass is important for image quality and mentions, as a method of realizing this, designing a pass mask used for distributing the image data across a plurality of scans and printing the image data.

Further, Japanese Patent Laid-Open No. 2007-15359 describes that it is possible to reduce image quality deterioration that occurs when a forward and backward printing position shift occurs by increasing the dispersiveness of each of an image printed in a forward direction and an image printed in a backward direction as a result of distributing an image generated by a quantization pattern across a plurality of scans.

However, in the configuration indicated in Japanese Patent No. 4519876, binary data (hereinafter referred to as an index pattern) corresponding to an m $\times$ n (m and n are positive integers, and at least one of m and n is an integer that is greater than or equal to 2) area is used as a method of replacing a multi-value input image, as image data, with printable binary data. On top that, a mask pattern is designed so that a group of print-permitted areas in units of an integer multiple of the above-mentioned m $\times$ n areas are arranged non-periodically. In this way, the amount of image data printed in each pass is made substantially the same. However, when image data is binarized using a combination of fixed patterns such as m $\times$ n, the numbers of images to be printed forward and backward are not necessarily the same. For example, Japanese Patent Laid-Open No. H9-46522 discloses a method of expressing tones for one input image having five levels of tone values by printing or not printing four dots in a 2 $\times$ 2 area. Further, the same reference discloses a method of preparing a plurality of patterns of dot arrangement in the 2 $\times$ 2 area for the same tone value and sequentially or randomly arranging the plurality of dot arrangement patterns. Regarding the 2 $\times$ 2 index pattern, assuming that an image (so-called solid image) to be rasterized using a level 4 pattern has a 100% duty, an image rasterized only using level 1 patterns has a 25% duty. Thus, in an image with a duty to be rasterized using a single level of index patterns, taking pattern arrangement into account makes it easy to align the respective amounts of image data to be printed forward and backward to be substantially the same. However, in images of other duties, different levels of index patterns are mixed, and so, it is difficult to align the amounts of forward and backward image data. Further, when performing forward and backward printing is according to a certain fixed thinning pattern, it is necessary to arrange index patterns taking the fixed thinning pattern into account, and so, it is thought that it will be harder to make the respective amounts of image data to be printed forward and backward to be the same. Further, if the amounts of data to be printed forward and backward cannot be made the same, it is expected that the dispersiveness of each pass will naturally deteriorate.

Additionally, however, the configuration described in Japanese Patent Laid-Open No. 2007-15359 does not mention generating inter-color quantized data and does not describe a method of reducing image quality deterioration caused by an inter-color printing position shift that occurs when exclusively arranging inter-color print pixels taking graininess into account in particular. EP 1 710 086 A2 and US 2008/0123148 A1 further propose methods of generating dithering matrixes for multiple passes by rearranging the threshold values of an initial dithering matrix to optimize their distribution.

SUMMARY OF THE INVENTION

The present invention provides a technique for suppressing image deterioration caused by interaction between inks in a pass and improving graininess of an image to be printed.

Further, the present invention provides a technique for suppressing image quality deterioration even when a printing position shift between print scanning in a forward direction and print scanning in a backward direction or between colors occurs.

The present invention in its first aspect provides a printing apparatus as specified in claims 1 to 8.

The present invention in its second aspect provides a method of controlling a printing apparatus as specified in claim 9.

Further features of the present invention will become apparent from the following description of exemplary embodiments with reference to the attached drawings.

BRIEF DESCRIPTION OF THE DRAWINGS

FIG. 1 is an external perspective view illustrating an example of the appearance of an inkjet printing apparatus.
FIG. 2 is a cross-sectional view inside the printing apparatus in a carriage printing medium conveyance direction.
FIG. 3 is a diagram illustrating an example of a configuration of a print head 3.
FIG. 4 is a block diagram illustrating an example of a hardware configuration in the printing apparatus.
FIG. 5 is a diagram for explaining a dither method in which a dither pattern is used.
FIG. 6 is a diagram for explaining multi-pass printing.
FIG. 7 is a schematic diagram for explaining column thinning printing.
FIG. 8 is a schematic diagram for explaining block thinning printing.
FIG. 9 is a diagram for explaining a method of creating a dither corresponding to column thinning printing.
FIG. 10A is a flowchart of a printing operation by the printing apparatus.
FIG. 10B is a flowchart of a method of creating a dither synchronized mask.
FIG. 11 is a diagram for explaining effects of a first embodiment.
FIG. 12 is a diagram for explaining a method of creating a dither pattern to be applied to block thinning printing.
FIG. 13 is a diagram illustrating an example of a configuration of index patterns.
FIG. 14 is a diagram for explaining a state in which a multi-value input image has been binarized using index patterns and a rasterization table.
FIG. 15 is a diagram for explaining a method of creating a composite dither pattern in a system that uses index patterns and a rasterization table.
FIG. 16 is a diagram illustrating an example of a pattern for creating a composite dither pattern in the system that uses index patterns and a rasterization table.
FIG. 17 is a diagram illustrating a composite dither pattern created using a pattern for creating a composite dither pattern in the system that uses index patterns and a rasterization table.
FIG. 18 is a block diagram illustrating an example of a hardware configuration in the printing apparatus.
FIG. 19A is a schematic diagram illustrating an example of a configuration of a quantization pattern 60.
FIG. 19B is an enlarged view of a certain region 60a in the quantization pattern 60.
FIG. 20A is a diagram illustrating a quantized input image 401.
FIG. 20B is a diagram illustrating division patterns 402a and 402b.
FIG. 20C is a diagram illustrating first print data 403.
FIG. 20D is a diagram illustrating second print data 404.
FIG. 21 is a diagram for explaining a method of creating a dither pattern.
FIG. 22A is a block diagram illustrating an example of a functional configuration for performing inter-color processing in the printing apparatus.
FIG. 22B is a flowchart of the operation of each functional unit of FIG. 22A.
FIG. 22C is a flowchart of overall processing related to generation of print data by the printing apparatus.
FIG. 23 is a diagram illustrating ranges of thresholds in which it is determined that "ink be ejected."
FIG. 24 is a diagram illustrating an example of print data.
FIG. 25 is a diagram for explaining an image quality change caused by a printing position shift.
FIG. 26 is a diagram for explaining print data and an image quality change caused by a printing position shift.
FIG. 27 is a diagram illustrating index patterns according to a fourth embodiment.
FIG. 28 is a diagram illustrating a composite dither pattern according to the fourth embodiment.
FIG. 29 is a diagram illustrating an example of a pass mask for a forward direction according to the fourth embodiment.
FIG. 30A is a diagram illustrating quantization of an input image according to a composite dither pattern.
FIG. 30B is a diagram illustrating superimposition of a composite dither pattern and a pass mask.
FIG. 30C is a diagram illustrating a rasterization table created based on a composite dither pattern and a pass mask.

**EP 4 535 226 B1**

DESCRIPTION OF THE EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate without deviating from the accompanied claims. Furthermore, in the attached drawings, the same reference numerals are given to the same or similar configurations, and redundant description thereof is omitted.

[First Embodiment]

In this specification, "printing" is assumed to not only represent cases of forming meaningful information such as characters and figures but also broadly represent cases of forming an image, a design, a pattern, or the like, regardless of whether they are meaningful or meaningless, on a printing medium or cases of processing a medium. In addition, it does not matter whether or not "printing" is manifested as being visually perceptible by humans.

A "printing medium" is assumed to not only represent paper used in typical printing apparatuses but also broadly represent what can receive ink such as cloth, plastic film, metal plate, glass, ceramic, wood, and leather.

Further, "ink" should be broadly interpreted as in the definition of "printing" described above and is assumed to represent a liquid that is applied on a printing medium to form an image, a design, a pattern, or the like, process a printing medium, or process ink. Examples of processing of ink include solidifying or insolubilizing a colorant in ink applied to a printing medium.

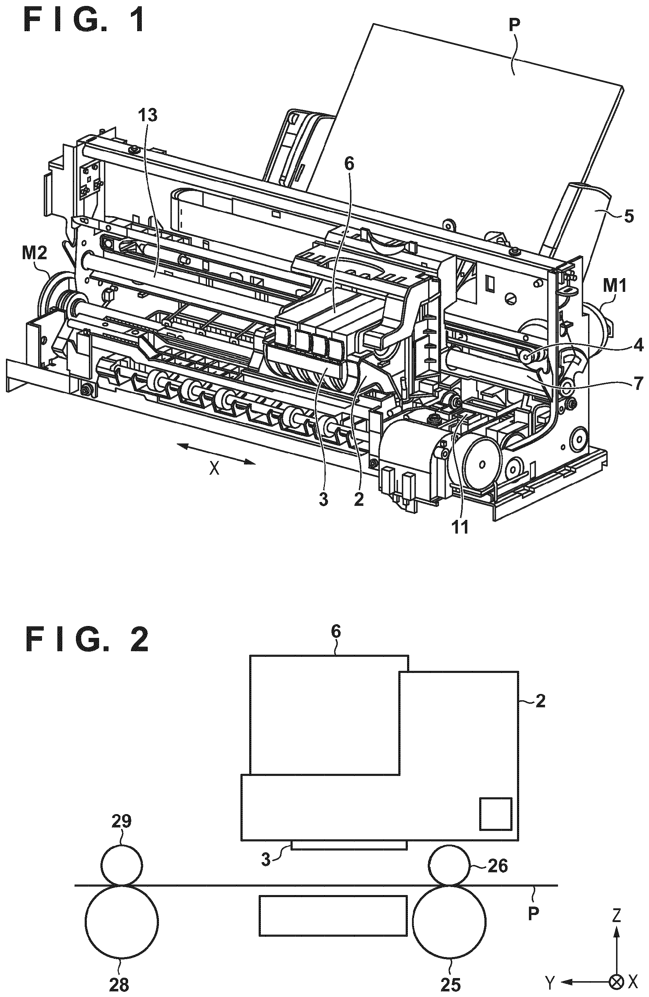

First, an example of the appearance of an inkjet printing apparatus which is an example of a printing apparatus according to the present embodiment will be described with reference to an external perspective view of FIG. 1. As illustrated in FIG. 1, the inkjet printing apparatus (hereinafter, referred to as printing apparatus) is provided with a print head 3, which performs printing by ejecting ink according to an inkjet method. A driving force generated by a carriage motor M1 is transmitted to a carriage 2 provided with the print head 3 from a transmission mechanism 4, and the carriage 2 is moved forward and backward (scanned forward and backward) in the direction of the arrows X, which is a main scanning direction. Together with the forward and backward scanning, a printing medium P, such as printing paper, for example, is fed through a feeding mechanism 5 and conveyed to a printing position, and printing is performed by ink being ejected from the print head 3 onto the printing medium P at the printing position.

FIG. 2 is a cross-sectional view inside the printing apparatus in a carriage printing medium conveyance direction. In the vicinity of the print head 3 in a Y direction, two pairs of conveyance rollers are provided. One pair of conveyance rollers is a pair of feeding rollers provided on an upstream side of the print head 3 in the Y direction (upstream side in the conveyance direction) and is constituted by a feeding roller 25 and a pinch roller 26. The other pair of conveyance rollers is a pair of discharge rollers provided on a downstream side of the print head 3 in the Y direction (downstream side in the conveyance direction) and is constituted by a discharge roller 28 and a pinch roller 29. The feeding roller 25 and the discharge roller 28 are formed by members that are continuous in the X direction, and the pinch rollers 26 and 29 are formed so as to be divided in the X direction. The printing medium P is conveyed to the downstream side in the Y direction by the feeding roller 25 and the discharge roller 28 rotating between scans of the print head 3 described above while the printing medium P is held between the pair of feeding rollers and the pair of discharge rollers.

In addition to the print head 3, an ink tank 6, which houses ink to be supplied to the print head 3, is also mounted on the carriage 2 of the printing apparatus. The print head 3 and the ink tank 6 are attachable to and detachable from the carriage 2.

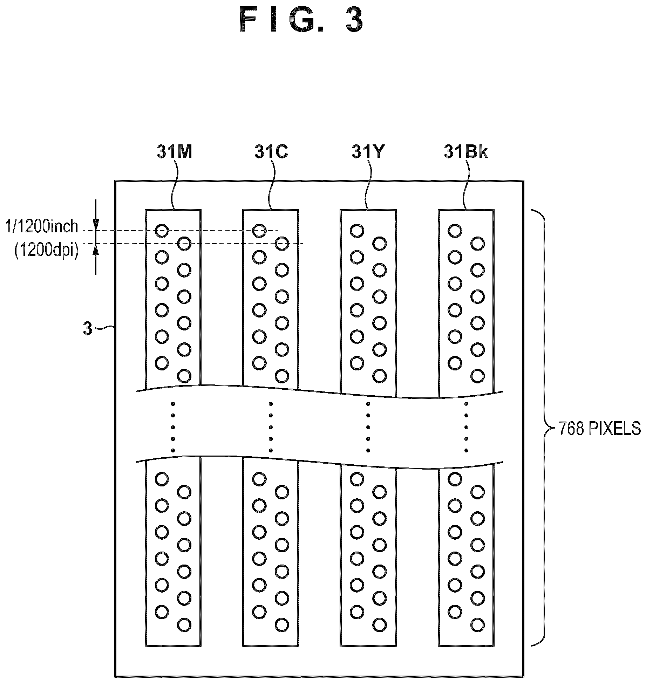

The printing apparatus illustrated in FIG. 1 is capable of color printing, and the carriage 2 is therefore provided with four ink tanks containing magenta (M), cyan (C), yellow (Y), and black (K) inks, respectively. FIG. 3 is a diagram illustrating an example of a configuration of the print head 3. In the print head 3, four ejection port arrays 31M, 31C, 31Y, and 31Bk capable of ejecting magenta, cyan, yellow, and black inks, respectively, are arranged in the X direction in that order. In these ejection port arrays, 768 ejection ports for ejecting respective inks are arranged at a 1200 dpi density. Therefore, an ejection port array has a length corresponding to 768 pixels in an arrangement direction. The ejection ports at positions adjacent to each other in the arrangement direction are arranged at positions shifted from each other in a direction perpendicular to the arrangement direction. The carriage 2 and the print head 3 are configured such that the bonding surfaces of both members are properly contacted to be able to achieve and maintain a necessary electrical connection. The print head 3 applies energy according to a printing signal to selectively eject ink from a plurality of ejection ports and perform printing.

As illustrated in FIG. 1, the carriage 2 is connected to a part of a driving belt 7 of a transmission mechanism 4 for transmitting a driving force of a carriage motor M1 and is slidably guided and supported along a guide shaft 13 in the direction of the arrows X. Accordingly, the carriage 2 scans forward and backward along the guide shaft 13 by forward rotation and backward rotation of the carriage motor M1. Further, a scale 11 for indicating the position of the carriage 2 along the main scanning direction (the direction of the arrows X) of the carriage 2 is provided.

Further, in the printing apparatus, a platen (not illustrated) is provided so as to face an ejection port surface on which the ejection ports of the print head 3 are formed. By ink being ejected from the print head 3 at the same time as the carriage 2 provided with the print head 3 is scanned forward and backward, printing is performed over the entire width of the printing medium P conveyed on the platen.

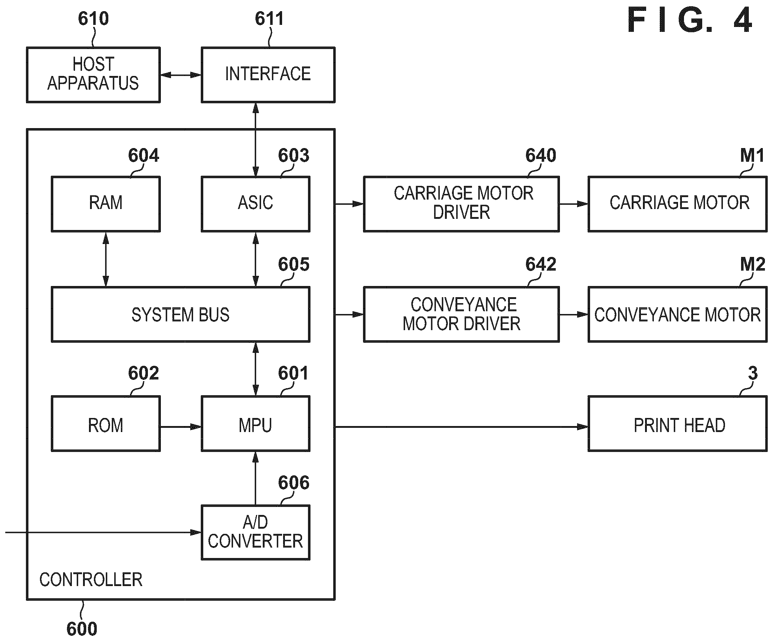

Next, an example of a hardware configuration in the printing apparatus will be described with reference to a block diagram of FIG. 4. FIG. 4 illustrates a configuration related to the following description and does not illustrate all hardware configurations in the printing apparatus.

A controller 600 controls the operation of the entire printing apparatus. The controller 600 includes a RAM 604, an ASIC 603, a system bus 605, a ROM 602, an MPU 601, and an A/D converter 606.

The MPU 601 executes various kinds of processing using computer programs and data stored in the RAM 604, performs operation control of the entire printing apparatus, and executes or controls various kinds of processing described as processing to be performed by the printing apparatus.

The ROM 602 stores setting data of the printing apparatus, computer programs and data related to the activation of the printing apparatus, computer programs and data related to the basic operations of the printing apparatus, and the like. The ROM 602 also stores computer programs and data for causing the MPU 601 to execute or control various kinds of processing described as processing performed by the printing apparatus.

The A/D converter 606 performs A/D conversion on various analog signals (a signal indicating the position of a printing medium, a signal indicating the temperature within the printing apparatus, etc.) and notifies the MPU 601, the application-specific integrated circuit (ASIC) 603, and the like of the signals.

The RAM 604 includes areas such as an area for storing computer programs and data loaded from the ROM 602, an area for storing data received from a host apparatus 610, and a work area used for when the MPU 601 executes various kinds of processing. That is, the RAM 604 can provide various areas as appropriate.

The ASIC 603 generates control signals for controlling the carriage motor M1, controlling a conveyance motor M2, and controlling the print head 3.

A carriage motor driver 640 performs driving control of the carriage motor M1 based on the "control signal for controlling the carriage motor M1" generated by the ASIC 603.

A conveyance motor driver 642 performs driving control of the conveyance motor M2 based on the "control signal for controlling the conveyance motor M2" generated by the ASIC 603. The conveyance motor M2 performs conveyance control of a printing medium by operating the above pair of conveyance rollers by the driving control.

The print head 3 performs ink ejection control based on the "control signal for controlling the print head 3" generated by the ASIC 603. The MPU 601, the RAM 604, the ASIC 603 are connected to the system bus 605.

The printing apparatus is capable of performing data communication with the host apparatus 610, which is an apparatus external to the printing apparatus, via an interface 611. For example, the printing apparatus may receive images and commands transmitted from the host apparatus 610 via the interface 611 or transmit status signals indicating a status in the printing apparatus to the host apparatus 610 via the interface 611.

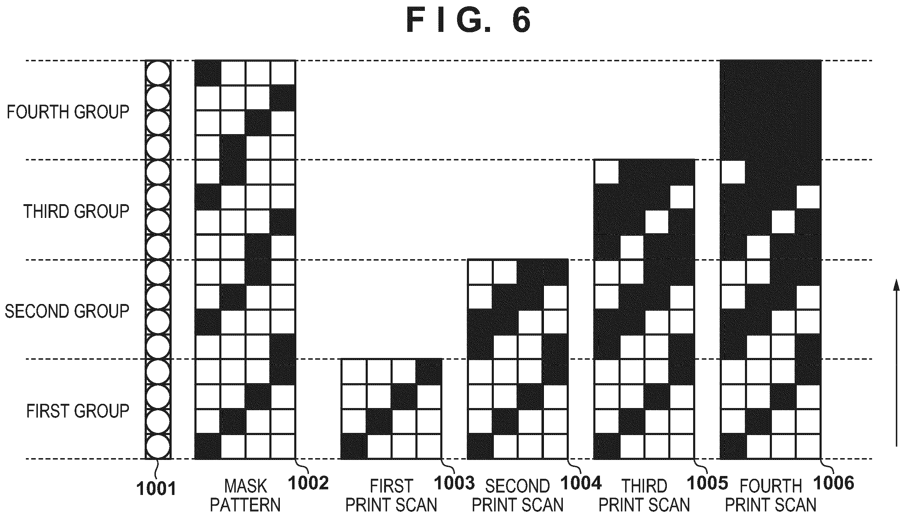

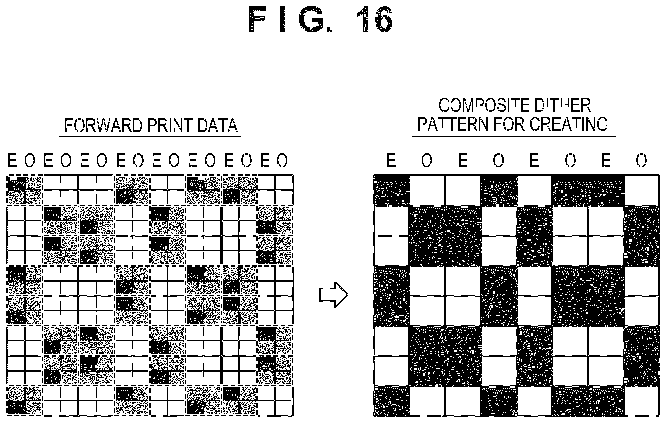

Next, multi-pass printing will be described with reference to FIG. 6. In FIG. 6, the print head and a printing pattern are schematically illustrated. In FIG. 6, a case where a print head 1001 which includes 16 nozzles is used will be described. As illustrated in FIG. 6, 16 nozzles included in the print head 1001 are divided into four groups, which are a first group, a second group, a third group, and a fourth group, and therefore, each group includes four nozzles. Then, a corresponding mask pattern 1002 is assigned to each group. An area (print-permitted position) in which a nozzle can perform printing is indicated by a black rectangle in the mask pattern 1002. Dot patterns printed by the respective groups have a complementary relationship with each other, and when these are superimposed, printing of a region corresponding to a $4 \times 4$ area is completed.

In a first round of print scanning (first print scan), as illustrated in a time series 1003, a $4 \times 4$ dot pattern corresponding to the mask pattern 1002 corresponding to the first group is printed by the first group.

In a second round of print scanning (second print scan), as illustrated in a time series 1004, a $4 \times 4$ dot pattern corresponding to the mask pattern 1002 corresponding to the second group is further printed by the second group on the previously printed pattern (printing result is the uppermost $4 \times 4$ pattern in the time series 1004).

In a third round of print scanning (third print scan), as illustrated in a time series 1005, a $4 \times 4$ dot pattern corresponding to the mask pattern 1002 corresponding to the third group is further printed by the third group on the previously printed pattern (printing result is the uppermost $4 \times 4$ pattern in the time series 1005).

In a fourth round of print scanning (fourth print scan), as illustrated in a time series 1006, a $4 \times 4$ dot pattern corresponding to the mask pattern 1002 corresponding to the fourth group is further printed by the fourth group on the previously printed pattern (printing result is the uppermost $4 \times 4$ pattern in the time series 1006).

Thus, an image is completed by repeating print scans. Each time a print scan is completed, the printing medium is conveyed by the width of a group in the direction of the arrow in FIG. 6. Therefore, an image is completed with four print scans in the same region (region corresponding to the width of each group) of the printing medium.

By adopting such multi-pass printing, it is possible to reduce image defects such as streaks and density unevenness described above. This is because, even if there are variations in the ejection characteristics of each nozzle and the conveyance amount, these characteristics will be dispersed across a wide range and become inconspicuous. In FIG. 6, four-pass multi-pass printing in which four print scans are performed for the same image region has been described as an example, but multi-pass printing is not limited thereto. Two-pass multi-pass printing in which an image is completed in two print scans, or multi-pass printing in which an image is completed in five or more print scans may be taken. The greater the number of multi-passes, the wider the range of dispersion of the variations in the ejection characteristics of each nozzle and the conveyance amount, and so, a smoother image can be obtained.

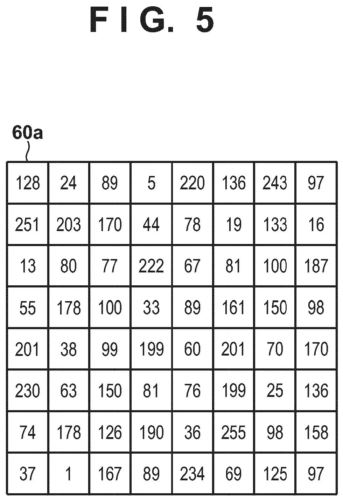

Many methods have already been proposed and disclosed for so-called binarization processing, which is processing for converting multi-value tone data indicating densities of an image to be printed into "ejection data indicating whether to print ink droplets (dots) on a printing medium", and basically, any method may be employed. For example, a dither method in which a dither pattern as illustrated in FIG. 5 is used may be used. In the dither method, the pixel values of an input image are compared with the thresholds of a dither pattern, and ejection data indicating that "ink droplets be printed (on) on the printing medium for the pixels having a pixel value greater than or equal to the threshold, and ink droplets not be printed (off) on the printing medium for the pixels having a pixel value less than the threshold" is generated. The dither pattern may be appropriately set according to the resolution of printing, and the input image can be directly converted into ejection data (binary data) if the resolution of the input image is 1200 dpi and the printing resolution is also 1200 dpi. Meanwhile, in view of the trend that the printing resolutions are getting larger and the number of types of ink color of the printing apparatus are increasing, there are cases where the burden is too great to perform the entirety of image processing of all colors at the same resolution as the printing resolution. For example, in recent years, a printing system in which the main image processing is performed in a host apparatus at a lower resolution than the printing resolution, then quantization processing for reducing the tone values to several levels for individual pixels is performed, and then final binarization processing is performed in the printing apparatus has been provided. In this case, since the tone of one pixel outputted by the host apparatus is expressed using a plurality of levels of density, it can be said that it is a good method for applications in which tonality is considered to be important such as photographic image quality.

Several proposals and practices have already been made on methods for converting several levels of multi-value density data into binary data. As one example thereof, Japanese Patent Laid-Open No. H9-46522 discloses a method of expressing tones for one input image having five levels of tone values by printing or not printing four dots in a $2 \times 2$ area. Further, the same reference discloses a method of preparing a plurality of patterns of dot arrangement in the $2 \times 2$ area for the same tone value and sequentially or randomly arranging the plurality of dot arrangement patterns. Doing so prevents the dot arrangement pattern for each tone from being fixed, and so, a pseudo contour for when pseudo halftone processing is performed, a so-called "sweeping phenomenon" which appears at the edge portions of an image, and the like are reduced. It is also described that there is an effect on averaging the use of a plurality of printing elements arranged in a print head. As described above, a method of converting several levels of multi-value density data included in low-resolution pixels into binary data of higher resolution is a useful technique in an inkjet printing apparatus for printing fine dots with high definition. Next, two types of fixed thinning printing, which are "column thinning printing" and "block thinning printing", will be described below.

(Column Thinning Printing)

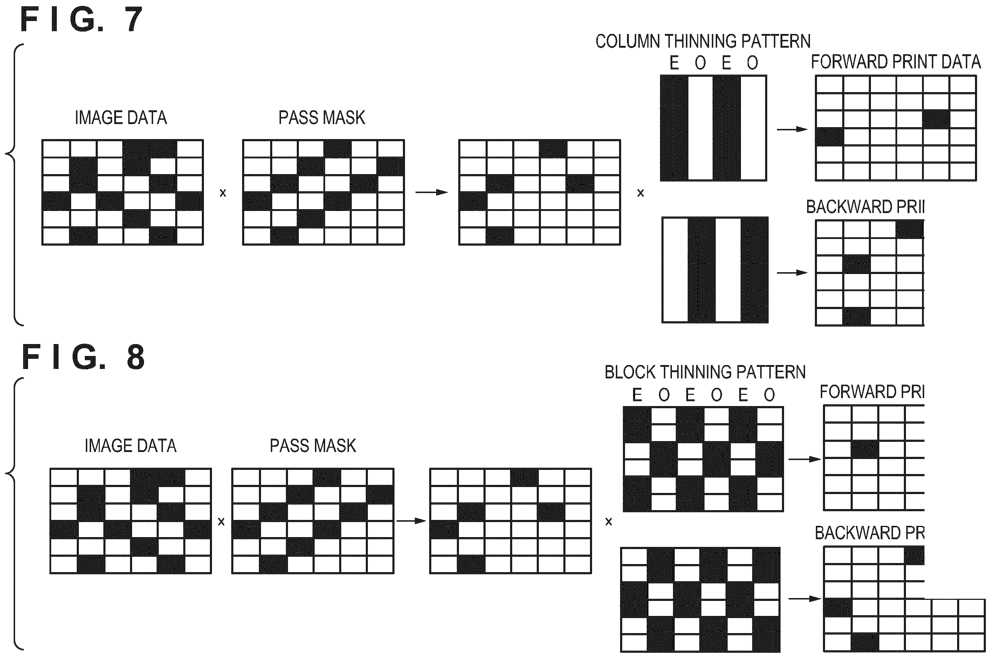

FIG. 7 is a schematic diagram for explaining column thinning printing. Column thinning printing is a printing method in which binary data arranged in the main scanning direction is printed while being thinned at predetermined intervals, and here, a case where data of every other column is alternately printed is illustrated. At the time of multi-pass printing, the binary data, which is the image data, is converted into masked binary data masked using a pass mask. As illustrated in FIG. 7, in the masked binary data, forward print data which is data (dots) of even (E) columns is printed in the forward direction, and backward print data which is data (dots) of odd (O) columns is printed in the backward direction.

When column thinning printing is performed, a driving frequency for ejecting ink from the individual nozzles can be set according to the frequency of printing columns. As a result, a main scanning speed whose upper limit is defined by the driving frequency can be further increased, and even in the same multi-pass printing, an image can be outputted at a higher speed when column thinning printing is used in combination.

(Block Thinning Printing)

FIG. 8 is a schematic diagram for explaining block thinning printing. Block thinning is a printing method based on driving control of a head that ejects ink. In multi-pass printing, in image data (masked binary data) passed through a pass mask, an image located in black portions in FIG. 8 is printed in the forward direction and an image located in white portions are printed in the backward direction.

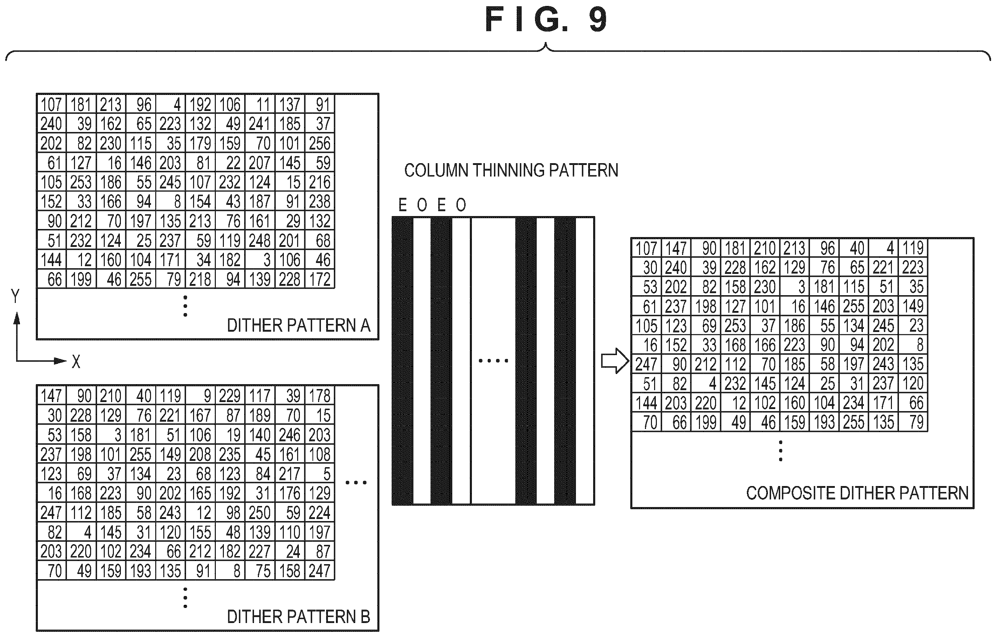

In the present embodiment, a case where the above column thinning printing is performed as fixed thinning printing will be described. For execution, it is important to create a dither pattern corresponding to the printing method. A a method of creating a dither corresponding to column thinning printing will be described with reference to FIG. 9. First, as illustrated in FIG. 9, two dither patterns (dither pattern A and dither pattern B) having a blue noise or green noise characteristic are prepared. Then, according to a fixed thinning pattern (column thinning pattern which is a pattern that signifies column thinning), thresholds of the dither pattern A are assigned to (arranged in) black line portions (columns E) and thresholds of the dither pattern B are assigned to (arranged in) white line portions (columns O) to create one composite dither pattern. Here, it is assumed that the dither pattern A and the dither pattern B, which are the originals, have a size that is 256 elements in the X direction and 256 elements in the Y direction. For each of these $256 \times 256 = 65536$ elements, a threshold of any value among 256 values in the range of 0 to 255 is assigned, and the number of thresholds of the same value is equal, with 256 instances of each distributed. Although it is possible to make the size of the dither pattern to be smaller than $256 \times 256$, to ensure the dispersiveness of the thresholds, that is, in order to design a dither pattern with a blue noise characteristic or a green noise characteristic, a certain size is necessary. The size of the composite dither pattern thus generated is 512 components in the X direction which is twice as large as the original dither patterns and is 256 elements in the Y direction which is the same as the original dither patterns.

If the composite dither pattern thus created is used, in all of the images in which pixel values have a single value from 0 to 255 and graininess is noticeable for example, when the image is converted into print data according to the previously described binarization processing of an input image, the amount of ejection data (dots) to be printed in the forward direction and the amount of the ejection data (dots) to be printed in the backward direction can be made substantially the same. That is, due to the method of creating a composite dither pattern, naturally the E columns printed in the forward direction and the O columns printed in the backward direction always include the same number of same-value thresholds. Therefore, the amounts of the E column and O column ejection data (i.e., the number of dots formed in a forward scan and the number of dots formed in a backward scan) are made equal by the binarization processing.

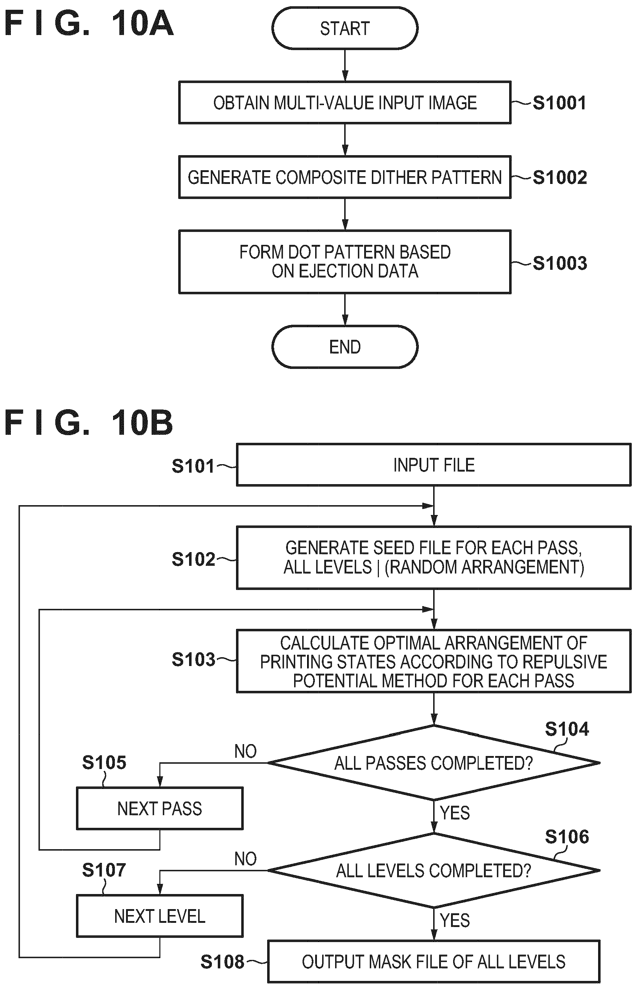

The printing operation by the printing apparatus will be described in accordance with the flowchart of FIG. 10A. In step S1001, the MPU 601 obtains a multi-value input image to be printed from the host apparatus 610 via the interface 611, for example. In step S1002, the MPU 601 generates a composite dither pattern as described above. In step S1003, the MPU 601 performs multi-value input image binarization processing using the composite dither pattern to generate ejection data (first data) of a dot pattern to be printed in a forward scan and ejection data (second data) of a dot pattern to be printed in a backward scan. The first data is data of a pixel group binarized using the thresholds of the E columns in the composite dither pattern, and the second data is data of a pixel group binarized using the thresholds of the O columns in the composite dither pattern.

The ASIC 603 controls the carriage motor driver 640, the conveyance motor driver 642, and the print head 3. Thus, in the forward scan, a dot pattern is formed on the printing medium based the first data, and in the backward scan, a dot pattern is formed on the printing medium based on the second data.

Thus, the first data of the dot pattern to be formed in the forward scan and the second data of the dot pattern formed in the backward scan are generated in the printing apparatus that forms dots on a printing medium by repeating the forward scan and the backward scan. In the generation, the first data and the second data are generated such that the dot pattern to be formed in each of the forward scan and the backward scan has either a blue noise characteristic or a green noise characteristic as a spatial frequency characteristic. The number of dots to be formed in the forward scan and the number of dots to be formed in the backward scan are substantially the same.

Furthermore, by designing a pass mask synchronized with the created composite dither pattern, the effect of making the amounts of forward and backward ejection data substantially the same is made possible, and the dispersiveness of ejection data for each pass can be increased. Next, this point will be described in detail.

A method of creating a pass mask synchronized with a dither pattern (hereinafter, referred to as dither synchronized mask) will be described in accordance with the flowchart of FIG. 10B. In step S101, the MPU 601 obtains, as an input file, a file (hereinafter, referred to as mask shape file) including "information necessary for creating a dither synchronized mask" such as a dither pattern in which thresholds from 0 to 255 are arranged as illustrated in FIG. 9, the number of passes, and a usage ratio of nozzles of the head to be used for each pass. Here, since the thresholds of the dither pattern to be used are 0 to 255, the multi-value input image is an input image in which pixel values have any value from 0 to 255 (8-bit value).

The method of obtaining a mask shape file by the MPU 601 is not limited to a specific obtainment method. For example, the MPU 601 may load the mask shape file from the ROM 602 into the RAM 604 or may download the mask shape file from the host apparatus 610 to the RAM 604 via the interface 611.

In step S102, the MPU 601 assumes one of the unselected levels (since pixel values of the multi-value input image are 8-bit values, 256 levels from 0 to 255, or if the levels are expressed in tones, 256 tones) as a selected level and generates a seed file for the selected level.

Here, a case where the selected level is level 1 will be described as an example. The MPU 601 generates an image (binary image) in which a level 1 image (image constituted by pixels having a pixel value of 1 in the input multi-value image) has been binarized using a dither pattern (composite dither pattern). This binary image is a binary image indicating that a pixel corresponding to an element having a threshold of 1 or less in the dither pattern is turned on and a pixel corresponding to an element having a threshold of greater than 1 is turned off in the dither pattern. Next, the MPU 601 divides this binary image into respective "images to be printed with the number of passes designated in the mask shape file" (seed files). The MPU 601 assumes one of the unselected passes among all of the passes as a selected pass and creates an image, in which the dots are arranged using a random number in the selected pass, as a seed file.

In this way, the MPU 601 creates a seed file of the selected pass for the selected level. Further, as an important point here, regarding the pass mask it is necessary that the feed amount of a printing medium and the vertical size (size in the Y direction) match as described above. Therefore, the vertical size of the dither pattern used when creating the dither synchronized mask is also made to match a feed amount of a printing medium per pass in multi-pass printing.

Naturally, in the state of the seed file, the dispersiveness per pass is not guaranteed, and so, in step S103, the MPU 601 generates, as a dither synchronization pass mask, a result of implementing, on the seed file of the selected pass generated for the selected level, optimization calculation for performing printing with good dispersion for each pass, using a repulsive potential method, such as that disclosed in Japanese Patent No. 4280732.

In step S104, the MPU 601 determines whether all the passes have been selected as the selected pass (whether the processing of step S103 has been performed for all the passes). As a result of this determination, if all the passes have been selected as the selected pass, the processing proceeds to step S106, and if there still is a pass that has not yet been selected as the selected pass, the processing proceeds to step S105.

In step S105, the MPU 601 selects one unselected pass among all the passes as the selected pass. Then, the processing proceeds to step S103, and the processing of step S103 is performed for the selected pass.

In step S106, the MPU 601 determines whether all the levels have been selected as the selected level (whether the processing of step S102 and the processing of step S103 have been performed for all the levels). As a result of this determination, if all the levels have been selected as the selected level, the processing proceeds to step S108, and if there still is a level that has not yet been selected as the selected level, the processing proceeds to step S107.

In step S107, the MPU 601 selects one unselected level among all the levels as the selected level. Then, the processing proceeds to step S102, and the processing from step S102 onwards is performed for the selected level.

In step S108, the MPU 601 generates a dither synchronization pass mask file generated for all the levels as a mask file and outputs the generated mask file. The output destination of the mask file is not limited to a particular output destination. For example, the MPU 601 may transmit the mask file to the host apparatus 610 via the interface 611 or may output the mask file to the RAM 604.

Here, the processing of step S103 is typically performed sequentially from a lower level to a higher level. Of course, it is possible to perform processing in an opposite manner from a higher level to a lower level; however, since a level for which optimization calculation has been completed once is fixed, a degree of freedom in calculating an arrangement with good dispersion decreases as the processing proceeds, and in principle, dispersiveness deteriorates. Therefore, it is desirable to start the calculation from a low level at which graininess is easily noticeable. Furthermore, in actual processing, rather than starting from level 1, the concept of "incrementation" is used, for example, 256 tones are divided into 32 parts (32 increments) to form groups, each with eight levels, and a seed file for which the levels of each group have been added is created, and by performing optimization calculation on that file, it is possible, as a result, to alleviate the previously-described problem that the dispersiveness worsens in the latter half levels as processing proceeds and to achieve good optimization of dispersiveness on average for all levels. Alternatively, a method such as that in which "increments" from a low tone to an intermediate tone, which are considered to affect graininess, are made finer (values are made greater) and "increments" to a high tone are made coarser (values are made smaller) is also conceivable. By introducing such a concept, it is also possible to weight the dispersiveness for each level.

By using the dither synchronized mask created in this way, it is possible to perform printing in which an image binarized using a corresponding dither pattern is controlled for each pass. For example, when designing a four-pass mask, it is also possible to design a mask such that low-tone images up to level 20 are printed within two passes. However, it is needless to say that the dispersiveness of the dither pattern itself used for mask design is necessary in order to perform printing with high dispersiveness for each pass. For this purpose, the dither pattern is generally designed to have a blue noise or green noise characteristic. Meanwhile, to ensure dispersiveness in reciprocal printing as well as dispersiveness for each pass, it is important in the first place to disperse the print pixels themselves between the forward and backward scans and make the number of the print pixels substantially the same.

However, there is no guarantee (usually different) that in such typical dithering the amount of data printed forward and backward will be the same. In contrast to this, in the present embodiment, by creating one composite dither pattern in which two dither patterns having a blue noise or green noise characteristic are combined and designing a mask synchronized with the composite dither pattern, dispersiveness in reciprocal printing and dispersiveness for each pass are realized.

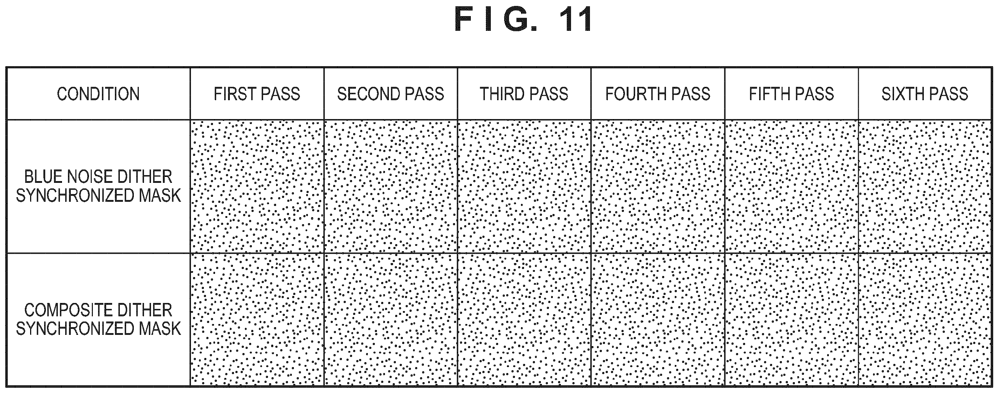

The upper side of FIG. 11 illustrates a result of verification by simulation of the state of a print image for each pass from the first pass to the sixth pass for when a certain single-tone image is printed using a six-pass dither synchronized pass mask created using the method described above for a typical blue noise dither (dither pattern corresponding to blue noise).

The lower side of FIG. 11 illustrates a result of verification by simulation of the state of the print image for each pass from the first pass to the sixth pass for when a certain single-tone image is printed using a six-pass dither synchronized pass mask created by the creation method according to the present embodiment. As illustrated in FIG. 11, it can be seen that the dispersiveness is greatly different in the latter half passes.

It has been found that the dispersiveness of each pass greatly affects the final image quality. Although ink droplets ejected onto a printing medium are absorbed by the printing medium, the speed thereof varies depending on the characteristics of the printing medium. Before ink droplets ejected in a preceding pass are completely absorbed, if the ink droplets of a subsequent pass come into contact therewith, it causes image quality defects such as beading. A typical inkjet-compatible printing medium promptly promotes the absorption of ink by applying special finish called a receptive layer on the surface. However, it is considered that the dispersiveness of each pass is particularly important in absorption-resistant and non-absorbent media, such as a printing medium for offset printing and a medium for signs (e.g., PVC), and the present embodiment is advantageous in improving image quality in such printing media.

[Second Embodiment]

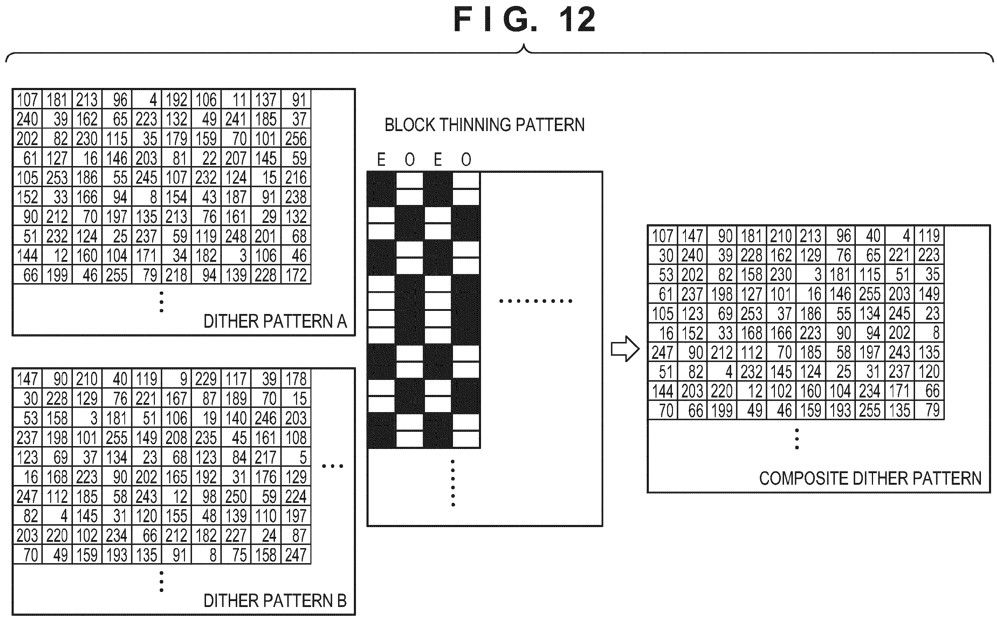

In the present embodiment, a fixed thinning pattern for when creating a composite dither pattern from two dither patterns is different from the first embodiment. As described above, various fixed thinning patterns can be considered based on the constraints of the entire system, and the block thinning pattern illustrated in FIG. 12 is an example.

As in the first embodiment, the thresholds of the dither pattern A are assigned to the black portions of the block thinning pattern (printed in a forward scan), and the thresholds of the dither pattern B are assigned to the white portions (printed in a backward scan), thereby creating a single composite dither pattern. A pass mask that synchronizes with the created composite dither pattern can be created using a method similar to that of the first embodiment.

The fixed thinning pattern for creating a composite dither pattern is not limited to those described in the first embodiment and the second embodiment. If a method of printing data to be printed forward and backward is determined as a fixed pattern due to the constraints of the system, the concept of each embodiment including the present embodiment can be applied.

[Third Embodiment]

In the first embodiment and the second embodiment, description has been given assuming that the resolution of the multi-value input image and the resolution of the print image are equal (e.g., they are both 1200 dpi). That is, it is assumed that the multi-value input image (8 bits) is converted directly into a binary print image using a dither pattern.

In contrast, in the present embodiment, a case where the resolution of the multi-value input image and the resolution of the print image are different (as one example, a case where the resolution of the multi-value input image is 600 dpi and the resolution of the print image is 1200 dpi) will be described.

At this time, as a method of converting a 600-dpi multi-value input image into a 1200-dpi binary image using a dither pattern, a method of expressing tones of one input image having five levels of tone values by printing or not printing four dots in a $2 \times 2$ area described in Japanese Patent Laid-Open No. H9-46522 described previously is used.

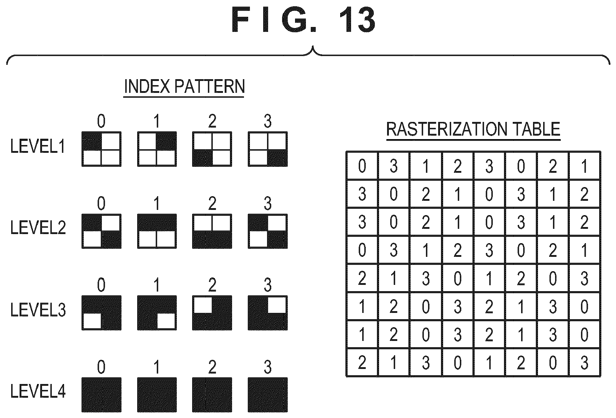

FIG. 13 illustrates a $2 \times 2$ pattern (hereinafter referred to as index pattern). FIG. 13 illustrates level-1 to level-4 index patterns, but all-blank index patterns are assumed as level-0 index patterns, and level-0 to level-4 index patterns are used (there are five levels of tone values).

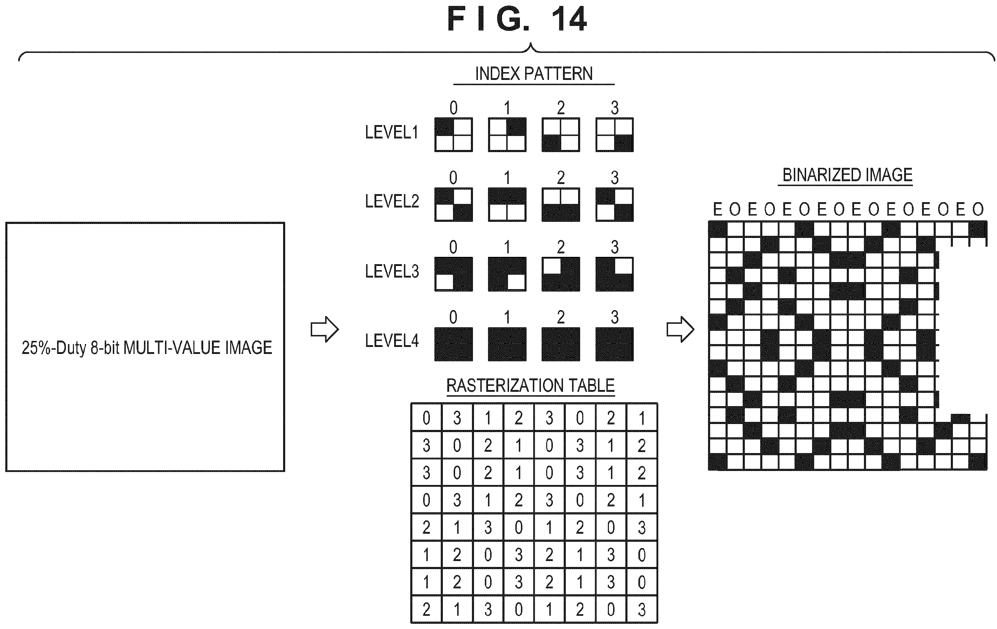

FIG. 13 illustrates a rasterization table, which is a table for determining the arrangement of index patterns regularly according to the rasterization table, instead of randomly selecting an index pattern of the same level. To put it simply, if a duty-100% image is a solid fill (image binarized using level-4 index patterns), a 25%-duty image is binarized by arranging level-1 index patterns according to the rasterization table. The state thereof is as in FIG. 14. That is, the rasterization table is expanded in a tiled form, and an index pattern of a level matching a numeral thereof is selected. This is the rasterization table.

When performing binarization by combining a dither pattern (composite dither pattern) and an index pattern, first, the thresholds of the dither pattern is divided into the number of levels of the index pattern. For example, if the thresholds of the dither pattern are 256 tones and the number of levels of the index pattern to be used is 4, the thresholds are divided into 4 groups, each with 256 / 4 = 64 thresholds. That is, the group whose thresholds are 0 to 63 is group 1, the group whose thresholds are 64 to 127 is group 2, the group whose thresholds are 128 to 191 is group 3, and the group whose thresholds are 192 to 255 is group 4. An index pattern to be selected is determined by which group a pixel value of the multi-value input image belongs when compared to a threshold of the dither pattern. If a pixel value of the multi-value input image belongs to group 1, a level-1 index pattern is selected. If a pixel value of the multi-value input image belongs to group 2, a level-2 index pattern is selected. If a pixel value of the multi-value input image belongs to group 3, a level-3 index pattern is selected. If a pixel value of the multi-value input image belongs to group 4, a level-4 index pattern is selected. Then, the multi-value input image is binarized based on the selected index patterns to generate a print image (first data and second data).

A method of creating a composite dither pattern to be used in a system in which a multi-value input image is binarized by combining a dither pattern and an index pattern in this manner will be described.

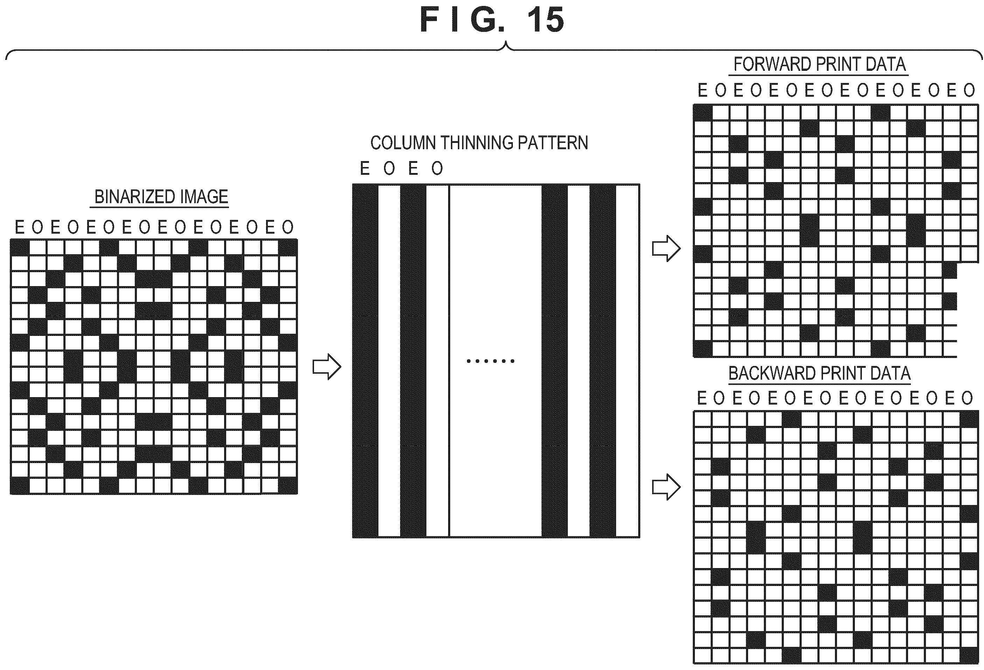

In the first embodiment and the second embodiment, since the print image is uniquely determined with a dither pattern, it is sufficient that a single composite dither pattern be created by assigning two dither patterns to a fixed thinning pattern. However, in the case where index patterns are involved, when reciprocal printing is finally performed with fixed thinning, it is necessary that index patterns be arranged such that the numbers of print images forward and backward are substantially the same (that the rasterization table be designed as a result). Here, the rasterization table is designed so that a 25%-duty multi-value input image binarized only using level-1 index patterns described previously satisfies the above condition. When column thinning printing is performed for the 25%-duty image binarized using the rasterization table illustrated in FIG. 14, the number of dots (amount of data) of forward printing and the number of dots (amount of data) of backward printing are the same as illustrated in FIG. 15.

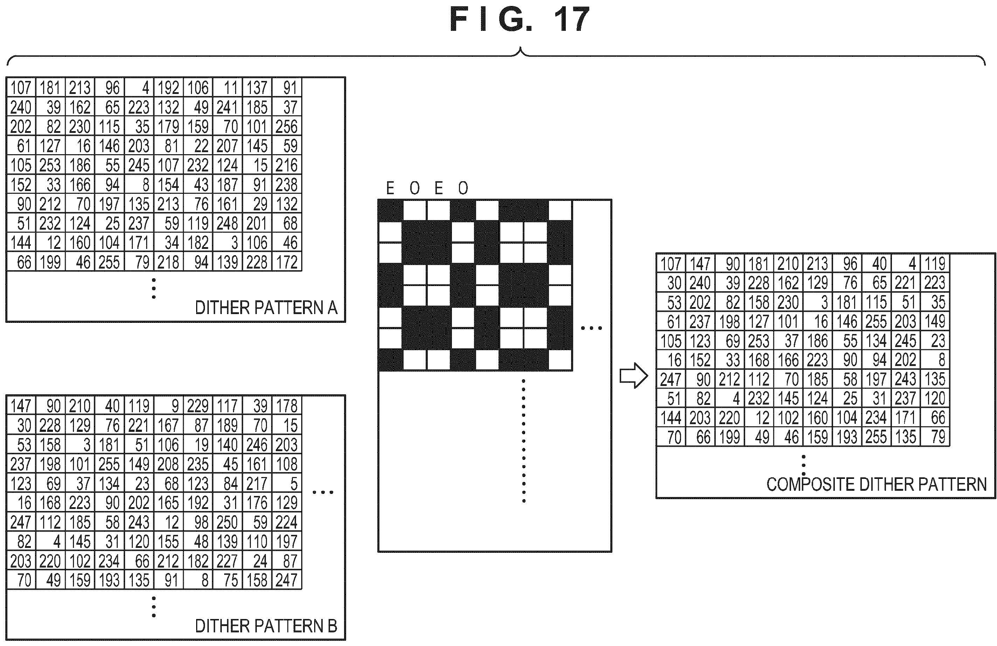

Based on this point, as a pattern for creating a composite dither pattern in the present embodiment, it is sufficient that the forward print data (may also be backward print data) of FIG. 15 be used as illustrated in FIG. 16. As illustrated in FIG. 17, the thresholds of the dither pattern A whose dispersiveness is ensured are assigned to the black portions of the pattern for creating a composite dither pattern and the thresholds of the dither pattern B whose dispersiveness is ensured is similarly assigned to the white portions of the pattern for creating a composite dither to create a single composite dither pattern. The dispersiveness of index patterns at the time of forward and backward division is determined by the design of the original dither pattern A and dither pattern B and the rasterization table. Therefore, in the design of the rasterization table, it is important that, in addition to the amounts of forward and backward image data being substantially equal, the image at the time of forward and backward division is in a state in which the dispersiveness is as high as possible. Thus far, a pattern for creating a composite dither pattern has been described assuming column thinning printing, but the concept remains the same even when fixed thinning for printing is block thinning.

The vertical size (size in the Y direction) of the dither pattern to be used here will be mentioned. In both the first embodiment and the second embodiment, the vertical size of the dither pattern matches the feed amount of the printing medium per pass in multi-pass printing. However, in the present embodiment, the multi-value input image is converted into a binary image using $2 \times 2$ index patterns, and so, the vertical size of the dither pattern to be used is half (1/2) of the printing medium per pass. That is, the vertical size of the composite dither pattern is the same as a value obtained by dividing the feed amount of the printing medium per pass in multi-pass printing by the vertical size (size in the Y direction) of the index pattern.

The method of creating a dither synchronized pass mask is the same as the method described previously, and in step S102 of FIG. 10B, binarization for when creating a seed file for each level is performed by combining a composite dither, index patterns, and a rasterization table, and the subsequent processes remain unchanged.

[Fourth Embodiment]

In the present embodiment, a method in which a composite dither pattern and pass masks are designed first if the resolution of a multi-value input image and the resolution of a print image are different will be described. Up to the third embodiment, a method in which a fixed thinning pattern is used has been described. However, a fixed thinning pattern cannot be used in a printing mode with few passes, such as two passes. It is because when, regarding image data, print data is distributed to a respective pass using a pass mask as illustrated in FIGS. 7 and 8, these pieces of print data are data itself to be printed forward and backward, respectively, and cannot be further thinned. In this case, a composite dither in which an index pattern and a thinning pattern are combined described in the third embodiment cannot be created. In the present embodiment, a printing mode with few passes, in particular, a printing mode with two passes is considered. Here, a case where the resolution of a multi-value input image is 600 dpi and the resolution of a print image is 600 dpi $\times$ 1200 dpi will be described as an example.

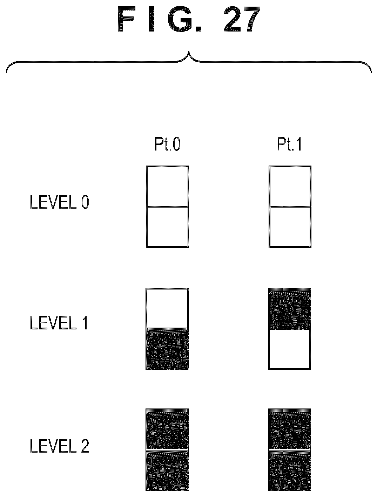

In the present embodiment, similarly to the third embodiment, a method of binarization in which a dither pattern and an index pattern are combined is taken when outputting a print image. In the present embodiment, a $1 \times 2$ pattern is used as an index pattern to be used for outputting a 600-dpi multi-value input image as a 600-dpi $\times$ 1200-dpi print image. In this case, as illustrated in FIG. 27, the levels of index pattern are 0 to 2, resulting in three levels of tone values. To divide (hereinafter described as quantization) the multi-value input image into the number of levels of the index pattern, a group of thresholds 0 to 127 of the dither pattern is set as group 1, and a group of thresholds 128 to 255 is set as group 2. Then, the pixel values of the multi-value input image and the thresholds of the dither pattern are compared to determine to which group the pixel values belong, and an index pattern to be selected is determined. Such a system in which binarization is performed by combining a dither pattern and an index pattern is considered. Here, description will be given using as an example a case where level-1 index patterns are selected for the multi-value input image through a dither pattern.

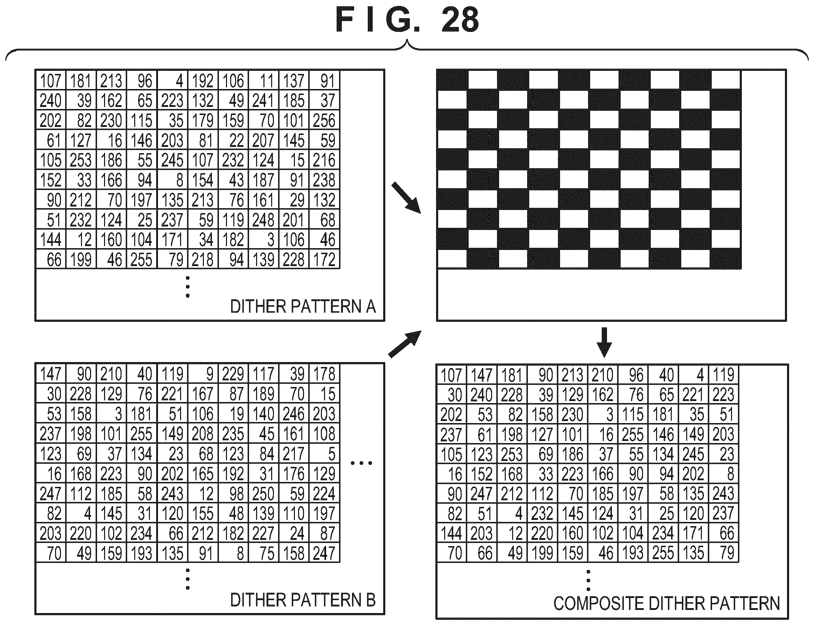

In the present embodiment, composite dither creation is first performed. Two dither patterns (dither pattern A and dither pattern B) having a blue noise or green noise characteristic are prepared. Here, the resolution of each dither pattern is 600 dpi. Each element constituting the dither pattern A and the dither pattern B is the same as that described in the first embodiment. Then, two dither patterns are composited into a single dither pattern by being arranged in a staggered arrangement. That is, as illustrated in FIG. 28, the thresholds of the dither pattern A are arranged so as to correspond to the black portions of the composite dither pattern, and the thresholds of the dither pattern B are arranged so as to correspond to the white portion of the composite dither pattern. Here, it is considered that the dither pattern A is thresholds for those for which printing is performed in the forward direction and that the dither pattern B is thresholds for those for which printing is performed in the backward direction. In the case of the two-pass printing mode, the print data determined by the thresholds of the dither pattern A is the print data for the forward direction (first pass) as is, and the print data determined by the thresholds of the dither pattern B is the print data for the backward direction (second pass) as is. The reason for arranging the dither patterns A and B in a staggered arrangement when generating the composite dither pattern is to increase the dispersiveness of the print data of each pass. Although an example in which arrangement is performed in a staggered arrangement when creating a composite dither pattern has been described, two dither patterns that have been prepared may be randomly arranged. To increase the dispersiveness of each pass, it is preferable that arrangement is performed such that when creating a composite dither pattern, either the dither pattern A or the dither pattern B is not locally concentrated or scattered.

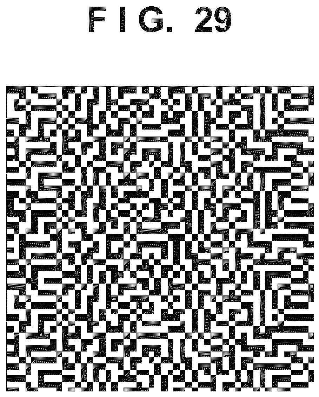

Next, a pass mask will be described. The pass mask determines the data to be printed in a respective pass and has the same resolution as the resolution of the print image to be outputted. In the present embodiment, it has the resolution of 600 dpi × 1200 dpi. In the two-pass printing mode, the pass mask itself is the print data for a respective one of the forward direction and the backward direction. Therefore, the duty of the pass mask is designed to be 50% such that the forward print data and the backward print data are approximately the same amount. Here, when setting the duty to 50%, it is considered in units of resolution of the multi-value input image. That is, it is considered such that duty is 50% in units of 600 dpi × 600 dpi. In light of the above, an example in which a blue noise pass mask as illustrated in FIG. 29 is applied will be described in the present embodiment. What is illustrated in FIG. 29 represents a pass mask for the forward direction, and the black portions are the print data for the forward direction. In the case of the two-pass printing mode, the print data for the backward direction is an inversion of black and white of FIG. 29. By applying a blue noise pass mask, effects of preventing banding noise in the sub-scanning direction, which is perpendicular to the main scanning direction, and unevenness between forward and backward directions, forward/backward being the main scanning direction, are expected. Here, the blue noise mask has been given as an example, but otherwise, it need only be a mask that satisfies the concept of resolution and duty.

The dither pattern A is defined to be for the forward direction and the dither pattern B is defined to be for the backward direction when generating the composite dither pattern. That is, regions to which the thresholds of the dither pattern A are assigned needs to be printed using the pass mask for the forward direction. In order to achieve this synchronization, a rasterization table is set at the end.

If a level-1 index pattern is currently selected by the composite dither pattern, two types of patterns as illustrated in the row of level 1 in FIG. 27 are conceivable as the index pattern. Since a 1 × 2 index pattern is considered for an input pixel having a resolution of 600 dpi, one box illustrated in FIG. 27 has a resolution of 600 dpi × 1200 dpi and has the same resolution as that of the pass mask (1 box of FIG. 29). That is, it is possible to synchronize the composite dither pattern and the pass mask using the rasterization table.

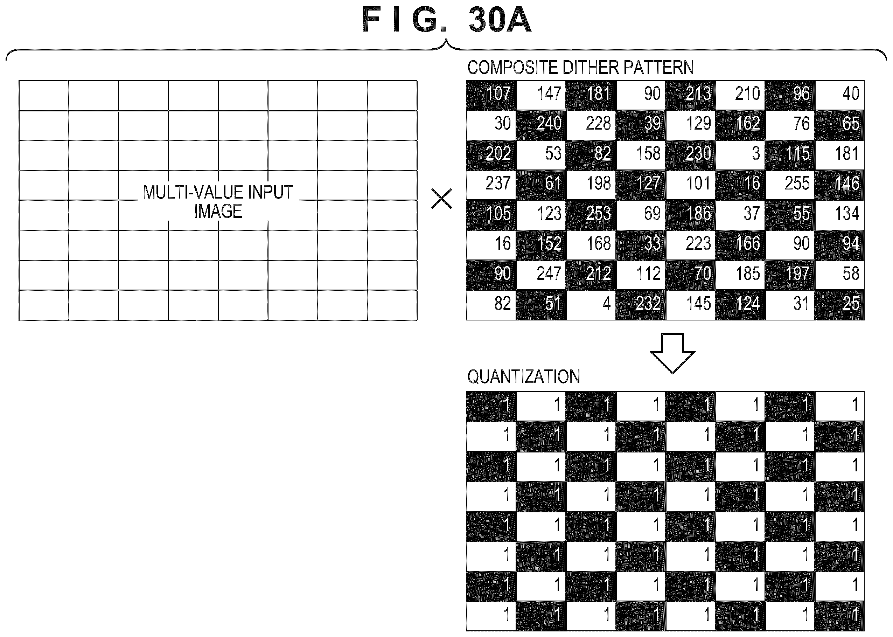

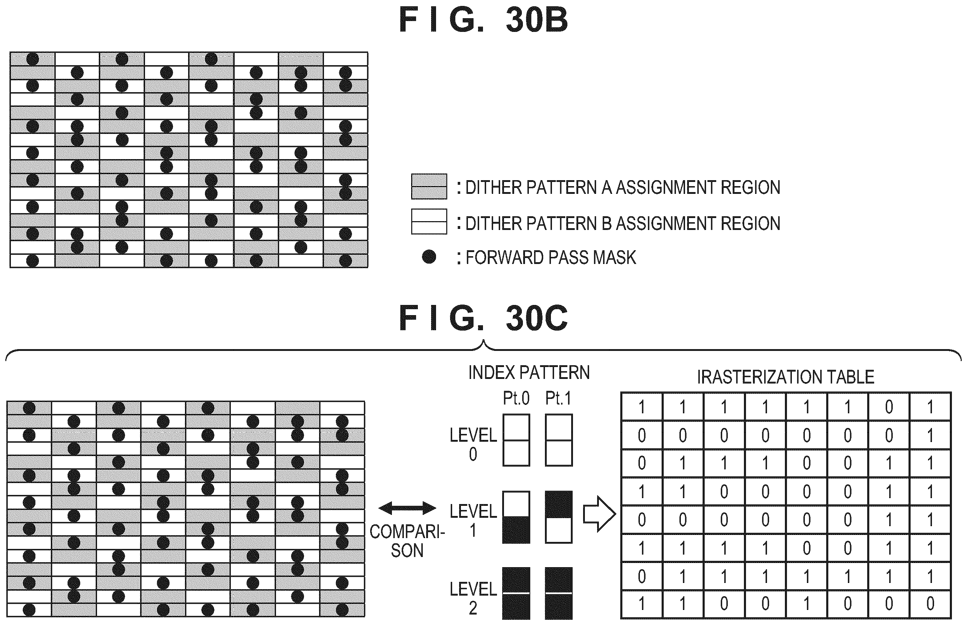

Here, an example in which the composite dither pattern and the pass mask of FIGS. 28 and 29 are used will be described below. FIGS. 30A, 30B, and 30C are diagrams for when 8 × 8 pixels of an input image have been extracted and considered. As illustrated in FIG. 30A, the multi-value input image is quantized using the composite dither pattern of FIG. 28. At this time, what is described in white text over a black background in a box represents a result outputted according to a threshold of the dither pattern A for the forward direction, and what is described in black text over a white background in a box represents a result outputted according to a threshold of the dither pattern B for the backward direction. A number in a box indicates the level of the index pattern. This time, it is assumed that a level-1 index has been selected as described above. FIG. 30B illustrates superimposition of the image quantized in FIG. 30A and the pass mask for the forward direction illustrated in FIG. 29. The smallest unit of a box is 600 dpi × 1200 dpi, and when viewed in units of 1 × 2 boxes, the portions filled in gray represent the regions to which the dither pattern A has been assigned in FIG. 30A, and those other than that represent the regions to which the dither pattern B has been assigned. Further, when viewed in terms of the smallest unit of a box, the black dot portions represent a pass mask pattern for the forward direction. When considering synchronization of the dither pattern and the pass mask, in the case of the two-pass printing mode, it is sufficient to consider synchronization for either the forward or backward direction. Here, synchronization for the forward direction is considered. In FIG. 30B, the regions filled in gray correspond to the dither pattern A assigned for the forward direction and thus need to be printed in the forward direction. That is, if the pass mask (black dot) for the forward direction is on the upper side in the gray region proportional to a 1 × 2 box of FIG. 30B, the rasterization table is set so that "Pt. 1" is selected among the level-1 index patterns illustrated in FIG. 27. Meanwhile, the regions that are not filled in gray correspond to the dither pattern B assigned for the backward direction and thus is set so as not to be printed in the forward direction. That is, if the pass mask (black dot) for the forward direction is on the upper side in the non-gray region proportional to a 1 × 2 box of FIG. 30B, the rasterization table is set so that "Pt. 0" is selected among the level-1 index patterns illustrated in FIG. 27. The rasterization table thus created is as illustrated in FIG. 30C.

By going through the above procedure, it is possible to set the amount of data for forward printing and backward printing to be approximately the same amount and output an image in which the dispersiveness of each of the print data is ensured.

[Fifth Embodiment]

In the following, differences from the above embodiments will be described, and unless otherwise mentioned, it is assumed that the present embodiment is similar to the above embodiments.

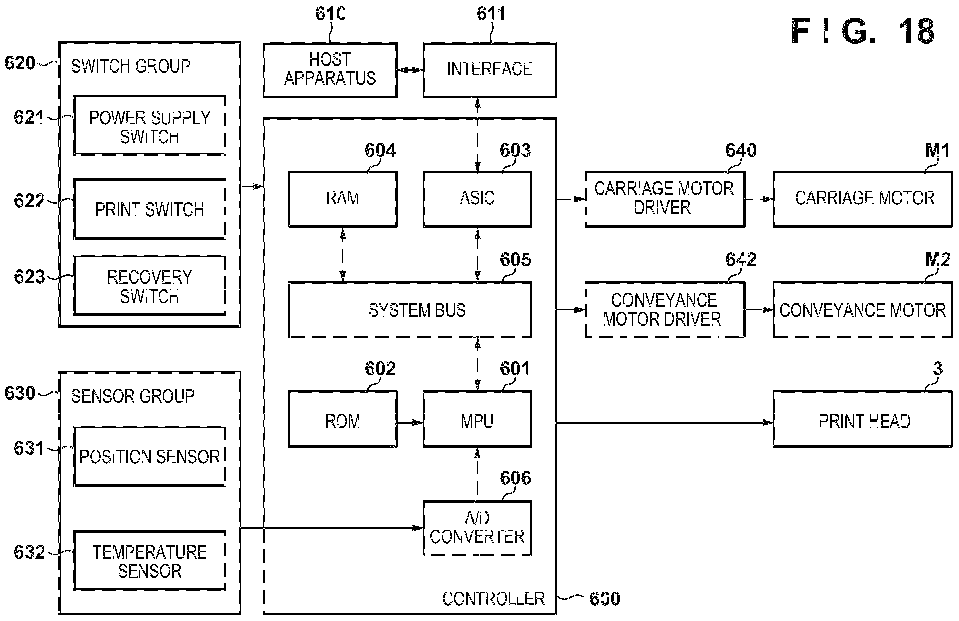

An example of a hardware configuration in the printing apparatus will be described with reference to a block diagram of FIG. 18. FIG. 18 illustrates a configuration related to the following description and does not illustrate all hardware configurations in the printing apparatus.

In the present embodiment, the A/D converter 606 performs A/D conversion on analog signals outputted from a sensor group 630 into digital signals and notifies the MPU 601, the application-specific integrated circuit (ASIC) 603, and the like of the digital signals.

The printing apparatus also includes a switch group 620 which can input various instructions to the printing apparatus by being operated by a user. The switch group 620 includes a power switch 621, a print switch 622, and a recovery switch 623.

The power switch 621 is a switch that can switch the power of the printing apparatus on or off by being operated by the user. The print switch 622 is a switch that can input a print instruction to the printing apparatus by being operated by a user. The recovery switch 623 is a switch for instructing the printing apparatus in which a trouble such as a paper jam has occurred to perform a recovery operation by being operated by the user.

The printing apparatus also includes the sensor group 630 for detecting various conditions related to the printing apparatus. The sensor group 630 includes a position sensor 631 and a temperature sensor 632. The position sensor 631 is a sensor that can detect the positions of the carriage and the printing medium, and the temperature sensor 632 is a sensor that can detect the temperature inside the printing apparatus or the temperature around the printing apparatus. The analog signals indicating the results of detection by the respective sensors included in the sensor group 630 are inputted to the A/D converter 606.

In the present embodiment, an image is printed on a unit region on a printing medium in accordance with a so-called bidirectional multi-pass printing method in which an image is printed on the unit region by causing the print head 3 to scan a plurality of times while performing a forward and backward operation relative to the unit region. As described above, it is possible to reduce image quality deterioration that occurs when a printing position shift occurs by increasing the dispersiveness of an image to be printed in each of the forward and backward printing.

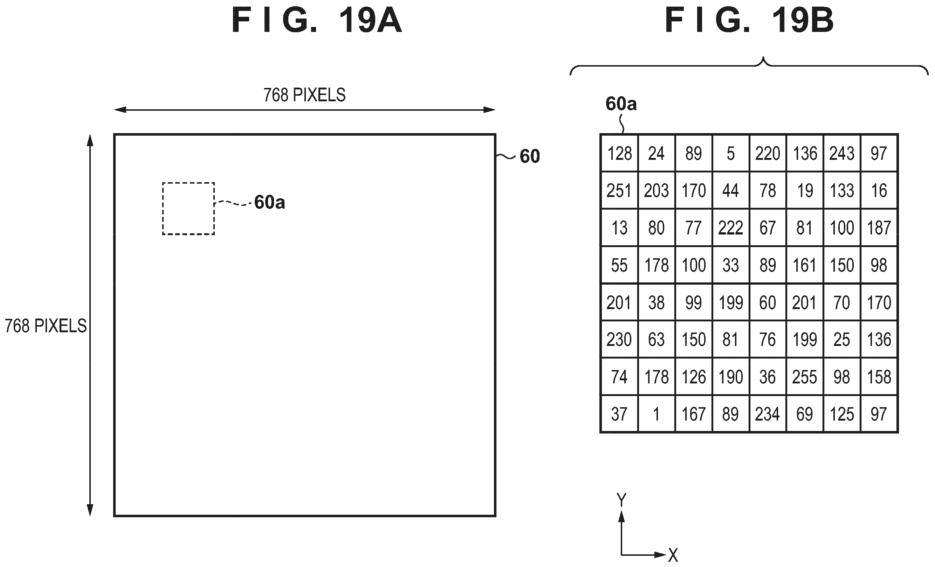

FIG. 19A is a schematic diagram illustrating an example of a configuration of a quantization pattern 60 used in the quantization processing according to the present embodiment. FIG. 19B is an enlarged view of a certain region 60a in the quantization pattern 60 illustrated in FIG. 19A. In the present embodiment, a dither pattern in which thresholds, each for determining ejection or non-ejection of ink for each of a plurality of pixels, are defined is used as the quantization pattern.

As illustrated in FIG. 19A, the dither pattern 60 to be used in the present embodiment has a size that is 768 pixels in the X direction and 768 pixels in the Y direction. Further, at each pixel position in the dither pattern 60, any value in a range from 1 to 255 (any of the 255 values) is set as a threshold as illustrated in the enlarged view of FIG. 19B.

In the quantization processing of the present embodiment, a tone value indicated by multi-value data of a pixel at a pixel-of-interest position in the input image and a threshold set at a position corresponding to the pixel-of-interest position in the dither pattern 60 are compared.

Then, if the tone value is greater than or equal to the threshold, a "value indicating that ink be ejected" is outputted as "quantized data corresponding to the multi-value data" for the pixel-of-interest position so that a dot corresponding to the pixel at the pixel-of-interest position is printed on the printing medium.

Meanwhile, if the tone value is less than the threshold, a "value indicating that ink not be ejected" is outputted as "quantized data corresponding to the multi-value data" for the pixel-of-interest position so that a dot corresponding to the pixel at the pixel-of-interest position is not printed on the printing medium.

Thus, by performing quantization processing on the input image using the dither pattern, quantized data obtained by quantizing the multi-value data of the pixel is generated for each pixel in the input image.

Here, in the dither pattern 60 illustrated in FIG. 19A, thresholds for $768 \times 768$ pixels are determined so as to be able to reproduce 256 levels of ink ejection amounts in accordance with 256 tone values from 0 to 255 indicated by the multi-value data.

For example, when multi-value data having 64 (= 256 / 4) tone values is inputted for all of $768 \times 768$ pixels corresponding to the quantization pattern 60, respective thresholds are determined so as to generate quantized data indicating ejection or non-ejection of ink for about 147456 (= $768 \times 768 / 4$) pixels. That is, the dither pattern 60 illustrated in FIG. 19A is defined such that there are about 147456 pixels for which a threshold of 64 or less is defined. In other words, in the dither pattern 60, the respective numbers of pixels for which respective thresholds from 1 to 255 are defined are substantially the same.

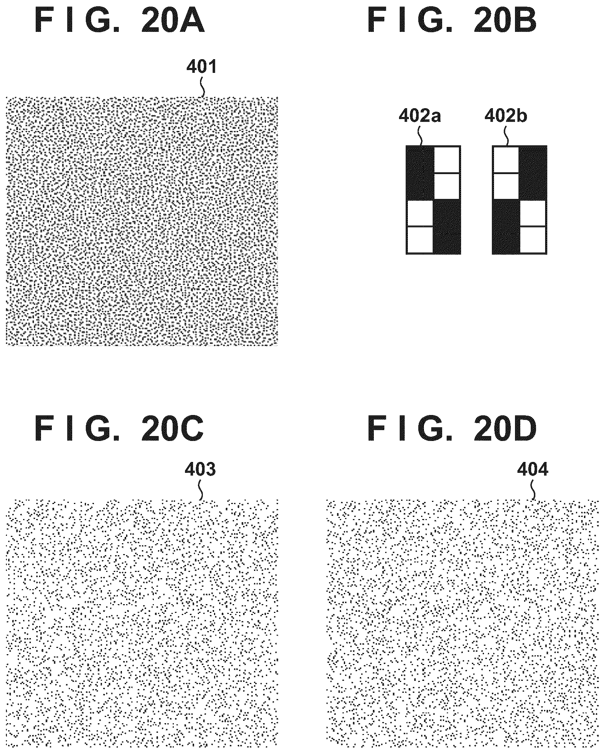

FIG. 20A is a diagram illustrating a quantized input image 401 obtained by performing quantization processing on an input image using the dither pattern 60. The data of a pixel in the quantized input image 401, which is the result of quantizing the input image using the dither pattern 60, is "quantized data obtained by quantizing the multi-value data of the pixel in the input image using the dither pattern 60."

When forming an image by performing print scanning a plurality of times based on the quantized input image 401, it is necessary to generate print data to be used for printing in each print scan from the quantized input image 401.

In the present embodiment, an image is formed by performing two print scans, one forward and one backward. Therefore, a case where print data to be used in a print scan in the forward direction and print data to be used in a print scan in the backward direction are generated using division patterns 402a and 402b illustrated in FIG. 20B, respectively, will be described below.

As illustrated in FIG. 20B, the division patterns 402a and 402b have 2 × 4 staggered patterns, and the rectangles (pixels) filled in black indicate ON bits (pixel value = 1) and the rectangles (pixels) filled in white indicate OFF bits (pixel value = 0).

To generate print data (first print data) to be used in a print scan in the forward direction, first, the division pattern 402a is arranged repeatedly in a tiled form to generate, as a first map, a map having the same size as that of the quantized input image 401. Then, a logical product of a pixel value at a pixel-of-interest position in the quantized input image 401 and a pixel value at that pixel-of-interest position in the first map are obtained, and the value of that logical product is set as a pixel value at the pixel-of-interest position in the first print data. FIG. 20C is a diagram illustrating first print data 403 generated using the quantized input image 401 and the division pattern 402a as described above.

To generate print data (second print data) to be used in a print scan in the backward direction, first, the division pattern 402b is arranged repeatedly in a tiled form to generate, as a second map, a map having the same size as that of the quantized input image 401. Then, a logical product of a pixel value at a pixel-of-interest position in the quantized input image 401 and a pixel value at that pixel-of-interest position in the second map are obtained, and the value of that logical product is set as a pixel value at the pixel-of-interest position in the second print data. FIG. 20D is a diagram illustrating second print data 404 generated using the quantized input image 401 and the division pattern 402b as described above.

In print scanning in the forward direction, ink ejection control is performed based on the first print data 403, and in print scanning in the backward direction, ink ejection control is performed based on the second print data 404.

When distributing the quantized input image 401 into print data to be used in a plurality of printing operations, a pattern in which ejection is not consecutive in the scanning direction in this manner is often used in consideration of effects that the vibration of the liquid surfaces of the nozzles has on the formation of ink droplets to be ejected subsequently and securing of a time width of a pulse signal to be applied to the print head. At this time, if the pattern has poor dispersiveness, that is, there are dense and sparse portions, as in the first print data 403 or the second print data 404, the image quality will greatly deteriorate when a forward and backward printing position shift occurs as described above. Therefore, the quantized input image 401 needs to be generated so that the dispersiveness of each of the forward data and backward data increases, and for this purpose, it is important to prepare a dither pattern in which the division patterns 402a and 402b are considered.

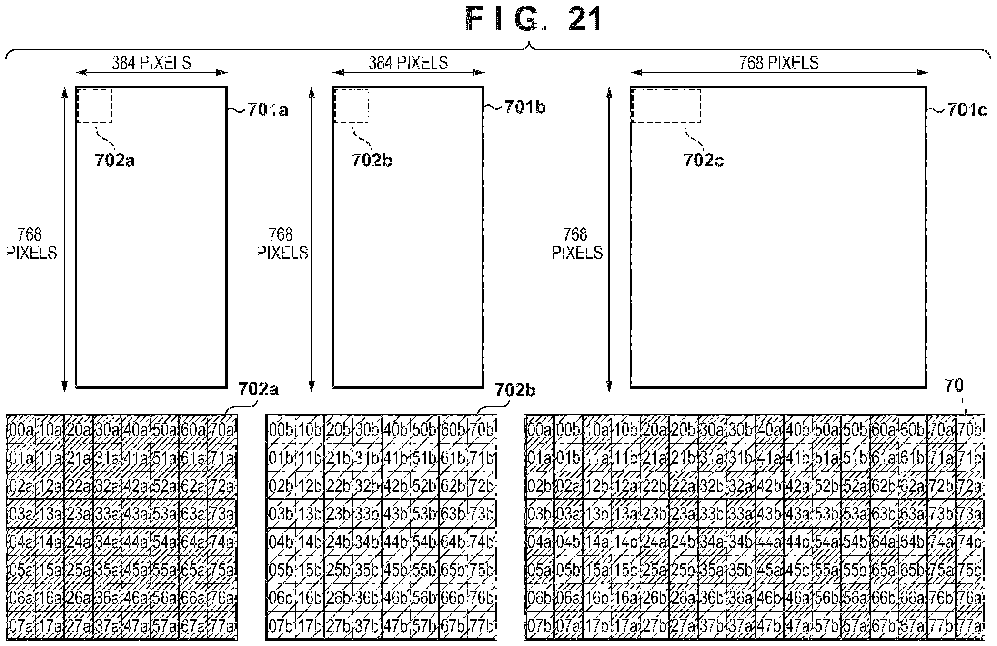

FIG. 21 is a diagram for explaining a method of creating such a dither pattern. Dither patterns 701a and 701b illustrated in FIG. 21 each are an independently-generated dither pattern. The dither patterns 701a and 701b have a blue noise characteristic or a green noise characteristic and have a size that is 384 pixels in the X direction and 768 pixels in the Y direction.

A region 702a is a region in the upper left corner of the dither pattern 701a, and in FIG. 21, an index is assigned to each rectangle (pixel) in the region 702a. A region 702b is a region in the upper left corner of the dither pattern 701b, and in FIG. 21, an index is assigned to each rectangle (pixel) in the region 702b.

These two dither patterns (dither patterns 701a and 701b) are combined using the division pattern 402a or the division pattern 402b to generate a composite dither pattern 701c.

For example, a map that has a size that is 768 pixels in the X direction and 768 pixels in the Y direction is generated by repeatedly arranging the division pattern 402a in a tiled form. Then, a threshold of a corresponding position in the dither pattern 701a is arranged at an ON-bit position in the map, and a threshold of a corresponding position in the dither pattern 701b is arranged at an OFF-bit position. In this way, a map in which the thresholds of the dither pattern 701a and the thresholds of the dither pattern 701b are arranged according to the division pattern 402a is generated as the composite dither pattern 701c. A similar method can be applied when generating a composite dither pattern using the division pattern 402b. The method for generating a composite dither pattern using the division pattern 402a or the division pattern 402b is not limited to the above method.

A region 702c is a region in the upper left corner in the composite dither pattern 701c. As illustrated in FIG. 21, when the region 702a is divided into units of 1 pixel × 2 pixel blocks (first blocks) and the region 702b is divided into units of 1 pixel × 2 pixel blocks (second blocks), the first blocks and the second blocks are arranged alternately in each of the X direction and the Y direction in the region 702c.

Here, as illustrated in FIG. 21, the order of arrangement of the first blocks in the region 702c is the same as the order of arrangement of the first blocks in the region 702a, and the arrangement of the second blocks in the region 702c is the same as the order of arrangement of the second blocks in the region 702b.

In the region 702c, the thresholds of the first blocks are thresholds to be used in comparison with pixels distributed to a print scan in the forward direction, and in the region 702c, the thresholds of the second blocks are thresholds to be used in comparison with pixels distributed to a print scan in the backward direction. The above explanation is not limited to the partial regions (regions 702a, 702b, and 702c), and is similarly applicable to the entire region of the dither pattern.

By generating a quantized input image using the composite dither pattern created by such a method, even if the quantized input image is divided into forward and backward scans using a division pattern, each piece of print data is generated from an independently-generated dither pattern having a blue noise characteristic or a green noise characteristic, and so, it is possible to make a pattern with high dispersiveness and less dense and sparse portions, and it is possible to reduce the deterioration of image quality even when a printing position shift between the forward and backward print scans occurs.

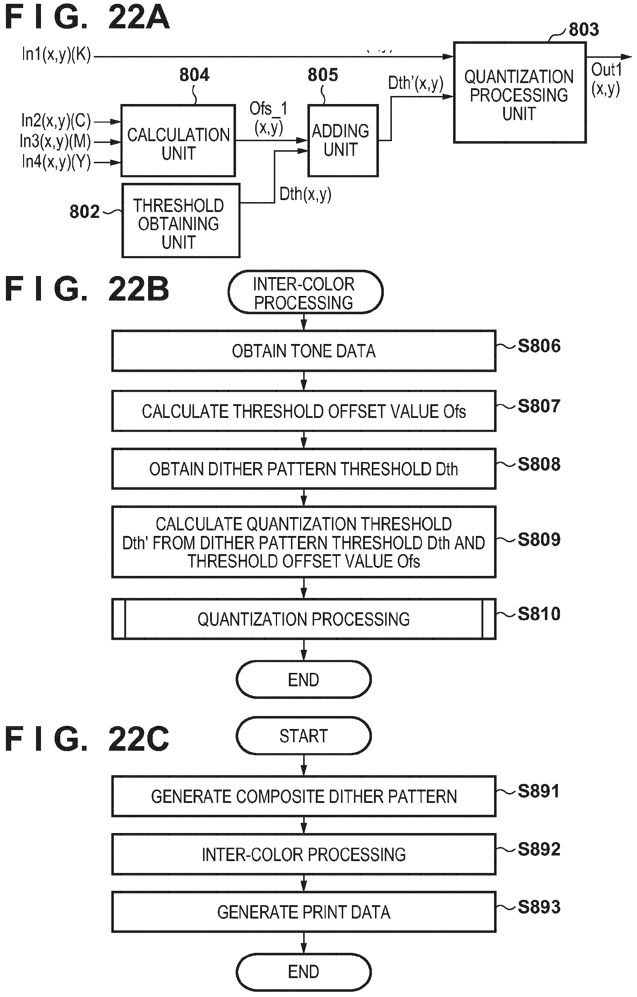

Next, inter-color processing in which print data of a plurality of colors is generated using the composite dither pattern thus generated will be described. FIG. 22A is a block diagram illustrating an example of a functional configuration for performing inter-color processing in the printing apparatus. In the present embodiment, a case where each functional unit illustrated in FIG. 22A is implemented in software (computer program) will be described. In the following, the functional units illustrated in FIG. 22A will be described as the performers of processing, but in practice, the functions of a corresponding functional unit are executed by the MPU 601 executing a computer program corresponding to the functional unit. The functional units illustrated in FIG. 22A may be implemented in hardware.

The operation in each functional unit of FIG. 22A will be described in accordance with the flowchart of FIG. 22B. In the following, a case where black (K) among the colors (cyan (C), magenta (M), yellow (Y), and black (K)) of an input image is the processing target will be described, but even when the processing target is another color, the following description is similarly applicable.

In step S806, a quantization processing unit 803 obtains black (K) tone data $In1(x, y)$ among tone data of each color of a pixel at a pixel position $(x, y)$ in the input image. A calculation unit 804 obtains tone data $In2(x, y)$, $In3(x, y)$, and $In4(x, y)$ of colors (cyan (C), magenta (M), yellow (Y)) other than black (K) among the tone data of each color of the pixel at the pixel position $(x, y)$ in the input image.

In step S807, the calculation unit 804 calculates a threshold offset $Ofs\_1(x, y)$ corresponding to the tone data $In1(x, y)$ according to the following Equation (1).

$$Ofs\_1(x, y) = \Sigma i[Ini(x, y)] \ldots (1)$$

The expression "$\Sigma i[Ini(x, y)]$" for obtaining a sum of tone values indicated by tone data $Ini(x, y)$ differs according to the left side as illustrated in the following Equations (1-1) to (1-4) (the method of obtaining a corresponding threshold offset is different depending on the processing target color).

$$Ofs\_1(x, y) = \Sigma i[Ini(x, y)] = 0 \ldots (1\text{-}1)$$

$$Ofs\_2(x, y) = \Sigma i[Ini(x, y)] = In1(x, y) \ldots (1\text{-}2)$$

$$Ofs\_3(x, y) = \Sigma i[Ini(x, y)] = In1(x, y) + In2(x, y) \ldots (1\text{-}3)$$

$$Ofs\_4(x, y) = \Sigma i[Ini(x, y)] = In1(x, y) + In2(x, y) + In3(x, y) \ldots (1\text{-}4)$$

In step S808, a threshold obtaining unit 802 obtains the composite dither pattern generated as described above. Then, an adding unit 805 obtains a threshold $Dt(x, y)$ corresponding to the pixel position $(x, y)$ in the composite dither pattern.

In step S809, the adding unit 805 offsets a difference between a threshold $Dth(x, y)$ and the tone data $In1(x, y)$ as described below. Specifically, the adding unit 805 obtains, as a quantization threshold $Dth'(x, y)$, a result of subtracting the threshold offset value $Ofs\_1(x, y)$ from the threshold $Dth(x, y)$ as indicated in the following Equation (2).

$$Dth'(x, y) = Dth(x, y) - Ofs\_1(x, y) \ldots (2)$$

When Dth'(x, y) is a negative value, the adding unit 805 adds a threshold maximum value Dth_max (in the present embodiment 255) as illustrated in the following Equation (3) to correct the quantization threshold Dth'(x, y). When

$$Dth'(x, y) < 0$$

$$Dth'(x, y) = Dth'(x, y) + Dth\_max \ ... \ (3)$$

Next, in step S810, the quantization processing unit 803 compares the tone data In1(x, y) and the quantization threshold Dth'(x, y) in a state in which the difference between the threshold Dth(x, y) and the tone data In1(x, y) has been offset by the adding unit 805.

Then, if the value (tone value) of the tone data In1(x, y) is greater than or equal to the quantization threshold Dth'(x, y), the quantization processing unit 803 outputs a "value indicating that ink be ejected" as "quantized data Out(x, y) corresponding to the tone data In1(x, y)".

Meanwhile, if the value (tone value) of the tone data In1(x, y) is less than the quantization threshold Dth'(x, y), the quantization processing unit 803 outputs a "value indicating that ink not be ejected" as "quantized data Out(x, y) corresponding to the tone data In1(x, y)".

If the quantization threshold Dth'(x, y) is a threshold for the forward direction, quantized data Out(x, y) for the forward direction is outputted. If the quantization threshold Dth'(x, y) is a threshold for the backward direction, quantized data Out(x, y) for the backward direction is outputted.

By performing the processing from step S806 to step S810 for all the pixel positions in the input image and all the colors (C, M, Y, and K in the above example) of the input image, it is possible to generate and output, for each pixel in the input image, quantized data of each color corresponding to the pixel.

The overall processing for generating print data by the printing apparatus described above will be described in accordance with the flowchart in FIG. 22C. In step S891, the MPU 601 generates the composite dither pattern 701c according to the division pattern 402a or the division pattern 402b from the dither patterns 701a and 701b.

In step S892, the MPU 601 performs inter-color processing according to the flowchart of FIG. 22B for all the pixel positions in the input image and all the colors of the input image to generate, for each color, a quantized input image having quantized data corresponding to each pixel in the input image as pixel data (pixel value) of each pixel. That is, in step S892, the MPU 601 generates a quantized input image for each color corresponding to the input image.

In step S893, the MPU 601 generates, for each color, print data to be used in a print scan in the forward direction and print data to be used in the print scan in the backward direction as described above using a division pattern corresponding to the color from the quantized input image corresponding to the color. Then, the MPU 601 outputs the "print data to be used in a print scan in the forward direction and print data to be used in a print scan in the backward direction" for each color to the ASIC 603.

In a print scan in the forward direction, the ASIC 603 performs ejection control for ink of each color (printing of dots on a printing medium) based on the print data of each color generated for the forward direction. In a print scan in the backward direction, the ASIC 603 performs ejection control for ink of each color (printing of dots on the printing medium) based on the print data of each color generated for the backward direction.

In this way, the printing apparatus according to the present embodiment is a printing apparatus that forms dots on a printing medium by repeating a forward scan and a backward scan and generates first data of a dot pattern to be formed in the forward scan and second data of a dot pattern to be formed in the backward scan. In the generation, the first data and the second data are generated such that the dot pattern to be formed in each of the forward scan and the backward scan has either a blue noise characteristic or a green noise characteristic as a spatial frequency characteristic. Further, in the generation, the dot pattern to be formed in the forward scan and the dot pattern to be formed in the backward scan are made to be different between colors.

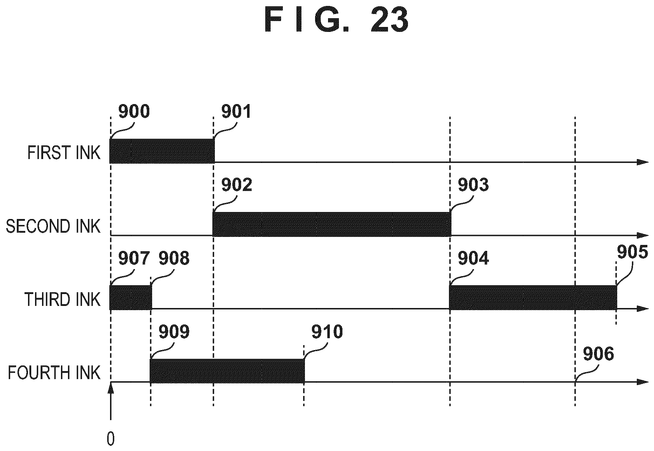

FIG. 23 is a diagram illustrating a range of thresholds for which it is determined that "ink be ejected" among a plurality of thresholds 0 to Dth_max arranged in a dither pattern when first to fourth multi-value data (In1 to In4) indicating an intermediate density are inputted for first to fourth inks, respectively.

In the case of the present embodiment, for the first ink, Ofs_1 = 0 according to Equation (1-1). Therefore, it is determined that "ink be ejected" for pixel positions corresponding to thresholds from 0 to In1 (reference numerals 900 to 901) among 0 to Dth_max.

For the second ink, Ofs_2 = In1 according to Equation (1-2). Therefore, when quantization is performed using the threshold Dth', it is determined that "ink be ejected" for pixel positions corresponding to thresholds from In1 to In1 + In2 (reference numerals 902 to 903) among the thresholds 0 to Dth_max arranged in the dither pattern.

For the third ink, Ofs_3 = In1 + In2 according to Equation (1-3). Therefore, when quantization is performed using the threshold Dth', it is determined that "ink be ejected" for pixel positions corresponding to thresholds from In1 + In2 to In1 + In2 + In3 (reference numerals 904 to 905) among the thresholds 0 to Dth_max arranged in the dither pattern. However, in the present example, it is assumed that In1 + In2 + In3 exceeds Dth_max. In this case, for a region exceeding Dth_max, it is determined that "ink be ejected" for pixel position corresponding to thresholds from 0 to In1 + In2 + In3 - Dth_max. That is, a range of thresholds for which it is determined that "ink be ejected" is from In1 + In2 to Dth_max (reference numerals 904 to 906) and from 0 to In1 + In2 + In3 - Dth_max (reference numerals 907 to 908).

For the fourth ink, Ofs_4 = In1 + In2 + In3 according to Equation (1-4). Therefore, when quantization is performed using the threshold Dth', it is determined that "ink be ejected" for pixel positions corresponding to thresholds from In1 + In2 + In3 to In1 + In2 + In3 + In4 among the thresholds 0 to Dth_max arranged in the dither pattern. However, in the present example, the entire region from In1 + In2 + In3 to In1 + In2 + In3 + In4 exceeds DTh_max. Therefore, it is determined that "ink be ejected" for pixel positions corresponding to thresholds from In1 + In2 + In3 - Dth_max to In1 + In2 + In3 + In4 - Dth_max (reference numerals 909 to 910).

Thus, in the present embodiment, while a common dither pattern is used, offset values that are different from each other are added to the thresholds to obtain quantization thresholds unique to each color. Then, by using the newly obtained quantization thresholds, even when similar tone data indicating an intermediate density is inputted for each color, the positions at which printing is performed on the printing medium are made different for each color, thereby allowing good dispersion.

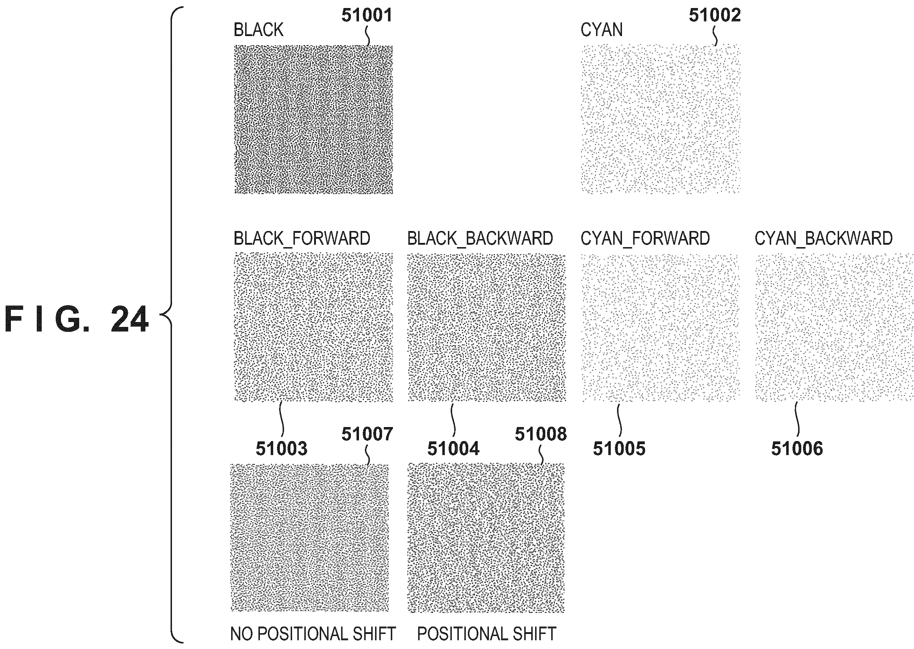

FIG. 24 is a diagram illustrating an example of print data. 17% of pixels among all the pixels in a black quantized input image 51001 are pixels with a "value indicating that ink not be ejected", and 10% of pixels among all the pixels in a cyan quantized input image 51002 are pixels with a "value indicating that ink not be ejected". Usually, pixels filled in black are pixels for which printing is to be performed and pixels filled in white are pixels for which printing is not to be performed, but here, the pixels for which printing is to be performed are filled in gray for the cyan quantized input image so as to be distinguished from the pixels for which printing is to be performed for black. As previously described, the quantized input images 51001 and 51002 are divided into print data 51003 to 51006 using the division patterns 402a and 402b.

The print data 51003 is print data to be used in a print scan in the forward direction for the quantized input image 51001, and the print data 51004 is print data to be used in a print scan in the backward direction for the quantized input image 51001.

The print data 51005 is print data to be used in a print scan in the forward direction for the quantized input image 51002, and the print data 51006 is print data to be used in a print scan in the backward direction for the quantized input image 51002.

Each of the forward and backward print scans are performed based on the print data 51003 to 51006, but at this time, not only a forward and backward printing position shift but also a printing position shift between black and cyan colors in each of the forward direction and the backward direction occurs. These are attributable to vibration during scanning of the print head and, due to inaccuracy of the machine body, the height between the print head and the printing medium fluctuating due to the print head scanning direction height of the platen supporting the printing medium not being stable. Such printing position shifts may occur periodically in the scanning direction and likely cause the uniformity of the density to decrease and the image quality to deteriorate.

A change in print data for when a printing position shift occurs between black and cyan at the time of forward print scanning will be described with reference to print data 51008 for when a printing position shift is occurring and print data 51007 for when a printing position shift is not occurring. As apparent from FIG. 24, when the two are compared, there is a large difference in their uniformity. When such a change in uniformity occurs periodically in the print scanning direction, the density becomes uneven and the image quality deteriorates.

In the present embodiment, such image quality deterioration is reduced by varying the division pattern used to generate print data from the black quantized input image and the division pattern used to generate print data from the cyan quantized input image. It is similar between one or more other colors. For this reason, in the present embodiment, patterns for obtaining "print data to be used in a print scan in the forward direction" and "print data to be used in a print scan in the backward direction" from the result (quantized input image) of quantization processing are different between colors (reversed as an example).

In FIG. 24, the division patterns 402a and 402b are used in this order to generate black and cyan forward and backward print data, but here, patterns obtained by inverting these division patterns are used to generate cyan forward and backward print data.

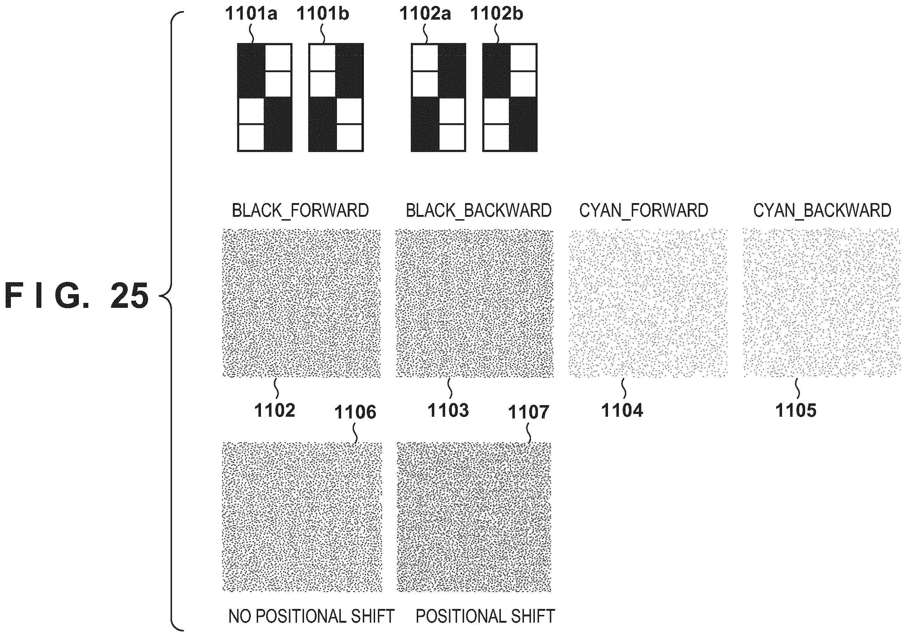

As illustrated in FIG. 25, division patterns 1101a and 1101b are division patterns used for generating black print data, and division patterns 1102a and 1102b are division patterns used for generating cyan print data. The division pattern 1101a is a division pattern used for generating print data to be used in a print scan for black in the forward direction. The division pattern 1101b is a division pattern used for generating print data to be used in a print scan for black in the backward direction. The division pattern 1102a is a division pattern used for generating print data to be used in a print scan for cyan in the forward direction. The division pattern 1102a is a pattern obtained by inverting the division pattern 1101a and is the same division pattern as the division pattern 1101b. The division pattern 1102b is a division pattern used for generating print data to be used in a print scan for cyan in the backward direction. The division pattern 1102b is a pattern obtained by inverting the division pattern 1101a and is the same division pattern as the division pattern 1101b.

Print data 1102 is print data to be used in a print scan for black in the forward direction, and print data 1103 is print data to be used in a print scan for black in the backward direction. Print data 1104 is print data to be used in a print scan for cyan in the forward direction, and print data 1105 is print data to be used in a print scan for cyan in the backward direction.

The print data 1102 and the print data 1103 are the same as the print data 51003 and the print data 51004 of FIG. 24, respectively, but for the cyan print data, the print data in the forward direction and the print data in the backward direction are opposite (inverted) between FIG. 24 and FIG. 25. That is, the cyan print data 1104 in the forward direction is equal to the print data 51006, and the cyan print data 1105 in the backward direction is equal to the print data 51005.

The print data 1106 and the print data 1107 are a comparison of a change for when a printing position shift between black and cyan at the time of forward printing occurs in the print data. It can be seen that a change in uniformity, such as that in the print data 51008 relative to the print data 51007 illustrated in FIG. 24, does not occur between the print data 1106 and the print data 1107. A difference between these changes in uniformity will be described.

As described thus far, since the patterns at the time of forward printing and backward printing are determined using the division patterns 402a and 402b, in order to increase the dispersiveness of each color, respective pieces of print data are generated using a dither pattern obtained by combining the two dither patterns 701a and 702b and while offsetting thresholds such that printing positions on the printing medium are different between black and cyan. Therefore, the print data 51007 obtained by combining the black print data 51003 in the forward direction and the cyan print data 51005 in the forward direction without a positional shift has a blue noise characteristic or a green noise characteristic of the dither pattern 701a. However, this characteristic is reduced when a positional shift between black and cyan occurs, and so, in the print data 51008, the uniformity is poor, and a difference in image quality from that the print data 51007 is large. Meanwhile, as previously described, when the division patterns 1101a and 1102b obtained by inverting the division patterns are used, in printing at the time of the forward direction, black print data has the dispersiveness of the dither pattern 701a but the cyan print data has the dispersiveness of the dither pattern 702a. Therefore, the print data 1106 obtained by combining these has a reduced blue noise characteristic or green noise characteristic, and a change in uniformity is small even if a positional shift occurs as in the print data 1107. Therefore, even when a positional shift between the colors occurs periodically, it is less likely to be visually recognized as density unevenness, and the image quality can be improved.

Thus, even in the configuration in which the positions at which printing is performed on the printing medium are made different for each color between the colors in consideration of graininess, it is possible to suppress image quality deterioration caused by a forward and backward printing position shift and a printing position shift between colors.

[Sixth Embodiment]

In the fifth embodiment, division patterns used for obtaining print data are inverted between two colors to suppress image quality deterioration caused by a forward and backward printing position shift and a printing position shift between the colors. In contrast, in the present embodiment, a case between three colors will be described. In each of the following embodiments including the present embodiment, differences from the fifth embodiment will be described, and unless otherwise mentioned below, it is assumed that the embodiments are similar to the fifth embodiment.

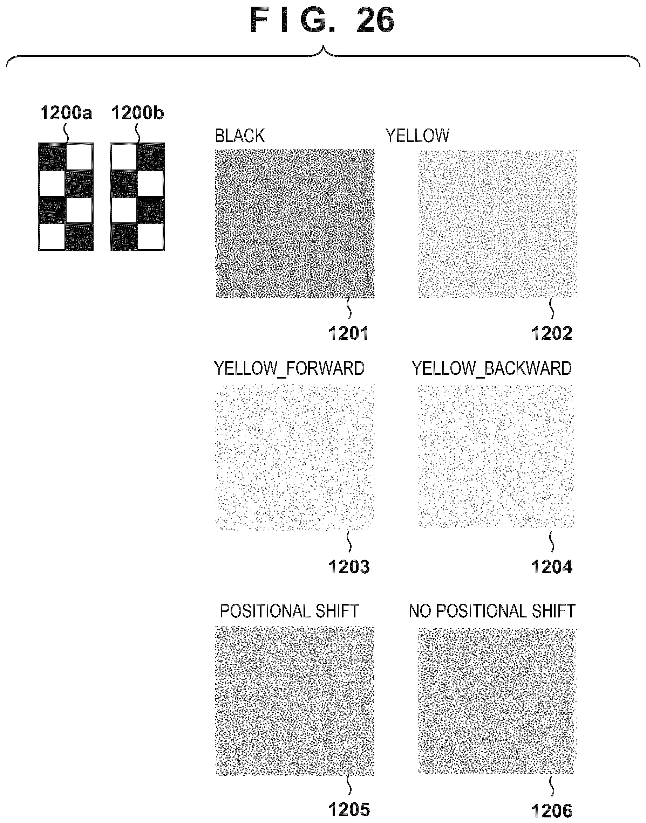

In the following, description will be given using yellow as a third color. As illustrated in FIG. 26, division patterns 1200a and 1200b are division patterns to be used for yellow print data and are different from the division pattern 1101a and 1101b, respectively, used for obtaining black print data. Quantized input images 1201 and 1202 are black and yellow quantized input images, respectively. Similarly to the fifth embodiment, 17% of pixels among all the pixels in the black quantized input image 1201 are pixels with a "value indicating that ink not be ejected", and 10% of pixels among all the pixels in the cyan quantized input image 1202 are pixels with a "value indicating that ink not be ejected". Here, the pixels for which printing is to be performed are filled in gray for the yellow quantized input image so as to be distinguished from the pixels for which printing is to be performed for black.

The printing apparatus generates print data 1203 to be used in a print scan in the forward direction using a yellow quantized input image 1202 and the division pattern 1200a as in the fifth embodiment. The printing apparatus generates print data 1204 to be used in a print scan in the backward direction using the yellow quantized input image 1202 and the division pattern 1200b as in the fifth embodiment. These are divided using division patterns different from a combination method for a composite dither pattern obtained by combining two dither patterns such that the dispersiveness is high when divided into forward and backward parts, and so, their respective dispersivenesses are low. Therefore, when a printing position shift occurs, a change in uniformity is large, and the image quality easily deteriorates. However, since yellow is high in brightness, a change in uniformity in yellow tend to be less visually recognized when compared to black and cyan. Meanwhile, regarding a pattern in which black and yellow are combined, since black is low in brightness, a change in uniformity caused by a positional shift between these colors is easy to visually recognize, and the degree of image quality deterioration is large.

Print data 1206 indicates print data for when a printing position shift has not occurred at the time of forward print scanning for black and yellow, and print data 1205 indicates print data for when a printing position shift has occurred. In this example, similar to what has been obtained by inverting the patterns for cyan illustrated in the fifth embodiment, the blue noise characteristic and the green noise characteristic of the patterns obtained by combining black and yellow are reduced. Therefore, a change in uniformity of the print data 1205 and the print data 1206 is small, and it is possible to suppress image quality deterioration caused by a positional shift between colors.

Although the relationship between black and yellow has been described as described above, it is similar for the relationship between cyan and yellow, and it is possible to suppress the change in uniformity caused by the presence or absence of a printing position shift therebetween. That is, it is possible to suppress a change in uniformity caused by a printing position shift not only between two colors described in the fifth embodiment but also between three colors, which are black, cyan, and yellow.

Here, description has been given for three colors, but it is needless to say that similar control can be performed between a larger number of colors by appropriately changing the division patterns. Further, the configuration of generating print data of each color using the same dither pattern for all the colors has been described, but the present invention is not necessarily limited to that configuration. In view of the improvement in image quality by not performing printing on the same pixel, by applying the above-described embodiment between colors using the same dither pattern, it is possible to suppress image quality deterioration.

[Seventh Embodiment]

In the fifth embodiment and the sixth embodiment, the method of combining two dither patterns by referencing division pattern has been described as the method of increasing the dispersiveness of each piece of print data when dividing a quantized input image into forward and backward print data. However, the method is not necessarily limited to this method as long as print data with high dispersiveness in each of the forward direction and the backward direction can be generated. A similar effect can be obtained in a method of creating a dither pattern by calculating thresholds while referencing, each time, a pattern divided by division patterns, and the above embodiments can be applied even with a dither pattern thus created.

Further, the configuration between three colors has been described in the sixth embodiment. Here, assuming that it is difficult to visually recognize a shift within a color at the time of forward and backward scanning due to the brightness of yellow is high, a configuration in which a printing position shift between colors is prioritized over a forward and backward position shift. However, by appropriately setting division patterns in accordance with the size and the occurrence frequency of the actual positional shift that occurs in the printing apparatus main body and the characteristics of each ink, it is possible to better suppress image quality deterioration.

Further, configuration may be taken such that, for at least two colors of the plurality of ink colors, dots are generated using the same dither pattern so that dots are not generated in the same pixel until the maximum value of the threshold is reached.

Further, configuration may be taken such that a pattern obtained by combining the print data to be used in a print scan in the forward direction and the print data to be used in a print scan in the backward direction has a greater low-frequency component than the spatial frequency characteristic of each.

The division pattern may have a frequency that is 1 to 32 times the printing resolution in both the print scanning direction and a direction perpendicular thereto. Further, configuration may be taken such that, regarding the respective dot patterns formed in the forward and backward scans, the lower the brightness of ink, the smaller the low-frequency component.

Further, although the printing apparatus and the method of performing printing using the printing apparatus have been described in the fifth embodiment and later, the present invention can be applied to an image processing apparatus or an image processing method of generating data for performing the printing method described in the fifth embodiment and later. Further, the present invention is also applicable to a form in which a program for performing the printing method according to each embodiment is prepared separately from the printing apparatus.

The numerical values, processing timing, processing order, processing entity, color space, data (information) obtainment method/transmission destination/transmission source/storage location, and the like used in each of the embodiments described above have been given as examples for the sake of providing a concrete explanation, and the present invention is not intended to be limited to such examples.

Further, some or all of the embodiments described above may be appropriately combined and used. Further, some or all of the embodiments described above may be selectively used.

Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

**Claims**

1. A printing apparatus operable to form dots on a printing medium (P) by repeating a forward scan and a backward scan, the printing apparatus comprising:

   generation means (600) for generating first data of a dot pattern to be formed in a forward scan and second data of a dot pattern to be formed in a backward scan, wherein
   the generation means generates the first data and the second data such that the dot pattern to be formed in the forward scan and the dot pattern to be formed in the backward scan have either a blue noise characteristic or a green noise characteristic as a spatial frequency characteristic,
   **characterized in that**
   the generation means generates a composite dither pattern using two dither patterns having either the blue noise characteristic or the green noise characteristic as the spatial frequency characteristic and generates the first data and the second data by performing binarization processing of an input image using the composite dither pattern wherein the number of thresholds of the same value in the composite dither pattern are the same, and whereby the number of dots to be formed in the forward scan and the number of dots to be formed in the backward scan are substantially the same.

2. The printing apparatus according to claim 1, **characterized in that**
   the generation means generates the composite dither pattern by arranging thresholds in the two dither patterns according to a column thinning pattern.

3. The printing apparatus according to claim 1, **characterized in that**
   the generation means further divides thresholds in the composite dither pattern into a plurality of groups and generates the first data and the second data by performing binarization processing based on an index pattern that accords with a group to which a pixel value in an input image belongs.

4. The printing apparatus according to any one of claims 1 to 3, **characterized by** further comprising:
   means (3) for performing printing of dots on the printing medium using, in addition to the first data and the second data, a pass mask designed so as to synchronize with the composite dither pattern.

5. The printing apparatus according to claim 1, **characterized in that**

   the generation means further generates a pass mask such that a printing duty in units of a resolution of the input image is equal for each pass,
   wherein the first data and the second data are generated based on an index pattern designed such that the composite dither pattern and the pass mask synchronize with each other.

6. The printing apparatus according to claim 4, **characterized in that**
   the pass mask is a mask generated based on a result of binarization processing of a pixel value for each tone of the input image based on the composite dither pattern.

7. The printing apparatus according to claim 1, **characterized in that**
   a vertical size of the composite dither pattern is the same as a feed amount of a printing medium per pass in multi-pass printing.

8. The printing apparatus according to claim 3, **characterized in that**
a vertical size of the composite dither pattern is the same as a value obtained by dividing a feed amount of a printing medium per pass in multi-pass printing by a vertical size of the index pattern.

9. A method of controlling a printing apparatus operable to form dots on a printing medium (P) by repeating a forward scan and a backward scan, the method comprising:

generating first data of a dot pattern to be formed in a forward scan and second data of a dot pattern to be formed in a backward scan (51003), wherein
in the generation, the first data and the second data are generated such that the dot pattern to be formed in the forward scan and the dot pattern to be formed in the backward scan have either a blue noise characteristic or a green noise characteristic as a spatial frequency characteristic,
**characterized in that**
a composite dither pattern is generated using two dither patterns having either the blue noise characteristic or the green noise characteristic as the spatial frequency characteristic (S1002) and the first data and the second data is generated by performing binarization processing of an input image using the composite dither pattern (S1003), whereby the number of thresholds of the same value in the composite dither pattern are the same, and whereby the number of dots to be formed in the forward scan and the number of dots to be formed in the backward scan are substantially the same.

**Patentansprüche**

1. Druckvorrichtung, die betreibbar ist, Punkte auf einem Druckmedium (P) durch Wiederholen eines Vorwärts-Scans und eines Rückwärts-Scans zu erzeugen, wobei die Druckvorrichtung umfasst:

eine Erzeugungseinrichtung (600) zum Erzeugen erster Daten eines in einem Vorwärts-Scan zu erzeugenden Punktmusters und zweiter Daten eines in einem Rückwärts-Scan zu erzeugenden Punktmusters, wobei
die Erzeugungseinrichtung die ersten Daten und die zweiten Daten derart erzeugt, dass das im Vorwärts-Scan zu erzeugende Punktmuster und das im Rückwärts-Scan zu erzeugende Punktmuster entweder eine Charakteristik von blauem Rauschen oder eine Charakteristik von grünem Rauschen als eine Raumfrequenzcharakteristik aufweisen,
**dadurch gekennzeichnet, dass**
die Erzeugungseinrichtung ein zusammengesetztes Dithermuster unter Verwendung von zwei Dithermustern erzeugt, die entweder die Charakteristik von blauem Rauschen oder die Charakteristik von grünem Rauschen als die Raumfrequenzcharakteristik aufweisen, und die ersten Daten und die zweiten Daten durch Durchführen einer Binarisierungsverarbeitung eines Eingangsbilds unter Verwendung des zusammengesetzten Dithermusters erzeugt, wobei die Anzahl von Schwellenwerten des gleichen Werts im zusammengesetzten Dithermuster gleich ist, wodurch
die Anzahl von im Vorwärts-Scan zu erzeugenden Punkten und die Anzahl von im Rückwärts-Scan zu erzeugenden Punkten im Wesentlichen gleich ist.

2. Druckvorrichtung nach Anspruch 1, **dadurch gekennzeichnet, dass**
die Erzeugungseinrichtung das zusammengesetzte Dithermuster durch Anordnen von Schwellenwerten in den zwei Dithermustern gemäß einem Spaltenausdünnungsmuster erzeugt.

3. Druckvorrichtung nach Anspruch 1, **dadurch gekennzeichnet, dass**
die Erzeugungseinrichtung ferner Schwellenwerte im zusammengesetzten Dithermuster in mehrere Gruppen unterteilt und die ersten Daten und die zweiten Daten durch Durchführen einer Binarisierungsverarbeitung basierend auf einem Indexmuster erzeugt, das einer Gruppe entspricht, zu der ein Pixelwert in einem Eingangsbild gehört.

4. Druckvorrichtung nach einem der Ansprüche 1 bis 3, **dadurch gekennzeichnet, dass** sie ferner umfasst:
eine Einrichtung (3) zum Durchführen von Drucken von Punkten auf das Druckmedium unter Verwendung, zusätzlich zu den ersten Daten und den zweiten Daten, einer Durchgangsmaske, die so gestaltet ist, dass sie sich mit dem zusammengesetzten Dithermuster synchronisiert.

5. Druckvorrichtung nach Anspruch 1, **dadurch gekennzeichnet, dass**

   die Erzeugungseinrichtung ferner eine Durchgangsmaske so erzeugt, dass eine Druckdichte in Einheiten einer Auflösung des Eingangsbilds für jeden Durchgang gleich ist,
   wobei die ersten Daten und die zweiten Daten basierend auf einem Indexmuster erzeugt werden, das so gestaltet ist, dass sich das zusammengesetzte Dithermuster und die Durchgangsmaske miteinander synchronisieren.

6. Druckvorrichtung nach Anspruch 4, **dadurch gekennzeichnet, dass**
   die Durchgangsmaske eine Maske ist, die basierend auf einem Ergebnis einer Binarisierungsverarbeitung eines Pixelwerts für einen jeweiligen Ton des Eingangsbilds basierend auf dem zusammengesetzten Dithermuster erzeugt wird.

7. Druckvorrichtung nach Anspruch 1, **dadurch gekennzeichnet, dass**
   eine vertikale Größe des zusammengesetzten Dithermusters gleich groß ist wie ein Vorschubbetrag eines Druckmediums pro Durchgang beim Multipassdruck.

8. Druckvorrichtung nach Anspruch 3, **dadurch gekennzeichnet, dass**
   eine vertikale Größe des zusammengesetzten Dithermusters gleich groß ist wie ein Wert, der durch Dividieren eines Vorschubbetrags eines Druckmediums pro Durchgang beim Multipassdruck durch eine vertikale Größe des Indexmusters erhalten wird.

9. Verfahren zum Steuern einer Druckvorrichtung, die betreibbar ist, Punkte auf einem Druckmedium (P) durch Wiederholen eines Vorwärts-Scans und eines Rückwärts-Scans zu erzeugen, wobei das Verfahren umfasst:

   Erzeugen erster Daten eines in einem Vorwärts-Scan zu erzeugenden Punktmusters und zweiter Daten eines in einem Rückwärts-Scan zu erzeugenden Punktmusters (S1003), wobei
   bei der Erzeugung die ersten Daten und die zweiten Daten derart erzeugt werden, dass das im Vorwärts-Scan zu erzeugende Punktmuster und das im Rückwärts-Scan zu erzeugende Punktmuster entweder eine Charakteristik von blauem Rauschen oder eine Charakteristik von grünem Rauschen als eine Raumfrequenzcharakteristik aufweisen,
   **dadurch gekennzeichnet, dass**
   ein zusammengesetztes Dithermuster unter Verwendung von zwei Dithermustern erzeugt wird, die entweder die Charakteristik von blauem Rauschen oder die Charakteristik von grünem Rauschen als die Raumfrequenzcharakteristik aufweisen (S1002), und die ersten Daten und die zweiten Daten durch Durchführen einer Binarisierungsverarbeitung eines Eingangsbilds unter Verwendung des zusammengesetzten Dithermusters erzeugt werden (S1003), wodurch die Anzahl von Schwellenwerten des gleichen Werts im zusammengesetzten Dithermuster gleich ist, und
   wodurch die Anzahl von im Vorwärts-Scan zu erzeugenden Punkten und die Anzahl von im Rückwärts-Scan zu erzeugenden Punkten im Wesentlichen gleich ist.

## Revendications

1. Appareil d'impression conçu pour former des points sur un support d'impression (P) en répétant un balayage vers l'avant et un balayage vers l'arrière, l'appareil d'impression comprenant :

   un moyen de génération (600) permettant de générer des premières données d'un motif de points à former dans un balayage vers l'avant et des secondes données d'un motif de points à former dans un balayage vers l'arrière, dans lequel
   le moyen de génération génère les premières données et les secondes données de sorte que le motif de points à former dans le balayage vers l'avant et le motif de points à former dans le balayage vers l'arrière présentent soit une caractéristique de bruit bleu soit une caractéristique de bruit vert en tant que caractéristique de fréquence spatiale,
   **caractérisé en ce que**
   le moyen de génération génère un motif de dither composite à l'aide de deux motifs de dither ayant soit la caractéristique de bruit bleu soit la caractéristique de bruit vert comme caractéristique de fréquence spatiale et génère les premières données et les secondes données en effectuant un traitement de binarisation d'une image d'entrée à l'aide du motif de dither composite dans lequel le nombre de seuils de même valeur dans le motif de dither composite sont identiques, et dans lequel
le nombre de points à former dans le balayage vers l'avant et le nombre de points à former dans le balayage vers l'arrière sont sensiblement identiques.

2. Appareil d'impression selon la revendication 1, **caractérisé en ce que**
le moyen de génération génère le motif de dither composite en agençant des seuils dans les deux motifs de dither selon un motif d'amincissement de colonne.

3. Appareil d'impression selon la revendication 1, **caractérisé en ce que**
le moyen de génération divise en outre les seuils dans le motif de dither composite en une pluralité de groupes et génère les premières données et les secondes données en effectuant un traitement de binarisation sur la base d'un motif d'index qui correspond à un groupe auquel appartient une valeur de pixel dans une image d'entrée.

4. Appareil d'impression selon l'une quelconque des revendications 1 à 3, **caractérisé en ce qu'**il comprend en outre :
des moyens (3) permettant de réaliser l'impression de points sur le support d'impression en utilisant, en plus des premières données et des secondes données, un masque de passage conçu pour se synchroniser avec le motif de dither composite.

5. Appareil d'impression selon la revendication 1, **caractérisé en ce que**

le moyen de génération génère en outre un masque de passage de sorte qu'une tâche d'impression en unités d'une résolution de l'image d'entrée soit égale pour chaque passage,
dans lequel les premières données et les secondes données sont générées sur la base d'un motif d'index conçu de sorte que le motif de dither composite et le masque de passage se synchronisent l'un avec l'autre.

6. Appareil d'impression selon la revendication 4, **caractérisé en ce que**
le masque de passage est un masque généré sur la base d'un résultat de traitement de binarisation d'une valeur de pixel pour chaque tonalité de l'image d'entrée sur la base du motif de dither composite.

7. Appareil d'impression selon la revendication 1, **caractérisé en ce que**
une taille verticale du motif de dither composite est la même qu'une quantité d'alimentation d'un support d'impression par passage en impression multipasse.

8. Appareil d'impression selon la revendication 3, **caractérisé en ce que**
une taille verticale du motif de dither composite est égale à une valeur obtenue en divisant une quantité d'alimentation d'un support d'impression par passage en impression multipasse par une taille verticale du motif d'index.

9. Procédé de commande d'un appareil d'impression conçu pour former des points sur un support d'impression (P) par répétition d'un balayage vers l'avant et d'un balayage vers l'arrière, le procédé comprenant :

la génération de premières données d'un motif de points à former dans un balayage vers l'avant et de secondes données d'un motif de points à former dans un balayage vers l'arrière (S1003), dans lequel
dans la génération, les premières données et les secondes données sont générées de sorte que le motif de point à former dans le balayage vers l'avant et le motif de point à former dans le balayage vers l'arrière présentent soit une caractéristique de bruit bleu soit une caractéristique de bruit vert comme caractéristique de fréquence spatiale,
**caractérisé en ce que**
un motif de dither composite est généré à l'aide de deux motifs de dither ayant soit la caractéristique de bruit bleu soit la caractéristique de bruit vert comme caractéristique de fréquence spatiale (S1002) et les premières données et les secondes données sont générées par la réalisation d'un traitement de binarisation d'une image d'entrée à l'aide du motif de dither composite (S1003), moyennant quoi le nombre de seuils de même valeur dans le motif de dither composite est identique, et dans lequel
le nombre de points à former dans le balayage vers l'avant et le nombre de points à former dans le balayage vers l'arrière sont sensiblement identiques.

# F I G. 1

# F I G. 2

# FIG. 3

F I G. 4

EP 4 535 226 B1

# FIG. 5

**60a**

| 128 | 24 | 89 | 5 | 220 | 136 | 243 | 97 |
|-----|-----|-----|-----|-----|-----|-----|-----|
| 251 | 203 | 170 | 44 | 78 | 19 | 133 | 16 |
| 13 | 80 | 77 | 222 | 67 | 81 | 100 | 187 |
| 55 | 178 | 100 | 33 | 89 | 161 | 150 | 98 |
| 201 | 38 | 99 | 199 | 60 | 201 | 70 | 170 |
| 230 | 63 | 150 | 81 | 76 | 199 | 25 | 136 |
| 74 | 178 | 126 | 190 | 36 | 255 | 98 | 158 |
| 37 | 1 | 167 | 89 | 234 | 69 | 125 | 97 |

FIG. 6

# F I G. 7

IMAGE DATA

PASS MASK

COLUMN THINNING PATTERN

E O E O

FORWARD PRINT DATA

BACKWARD PRII

# F I G. 8

IMAGE DATA

PASS MASK

BLOCK THINNING PATTERN

E O E O E O

FORWARD PRI

BACKWARD PR

EP 4 535 226 B1

# FIG. 9

EP 4 535 226 B1

DITHER PATTERN A

| 107 | 181 | 213 | 96 | 4 | 192 | 106 | 11 | 137 | 91 |
|---|---|---|---|---|---|---|---|---|---|
| 240 | 39 | 162 | 65 | 223 | 132 | 49 | 241 | 185 | 37 |
| 202 | 82 | 230 | 115 | 35 | 179 | 159 | 70 | 101 | 256 |
| 61 | 127 | 16 | 146 | 203 | 81 | 22 | 207 | 145 | 59 |
| 105 | 253 | 186 | 55 | 245 | 107 | 232 | 124 | 15 | 216 |
| 152 | 33 | 166 | 94 | 8 | 154 | 43 | 187 | 91 | 238 |
| 90 | 212 | 70 | 197 | 135 | 213 | 76 | 161 | 29 | 132 |
| 51 | 232 | 124 | 25 | 237 | 59 | 119 | 248 | 201 | 68 |
| 144 | 12 | 160 | 104 | 171 | 34 | 182 | 3 | 106 | 46 |
| 66 | 199 | 46 | 255 | 79 | 218 | 94 | 139 | 228 | 172 |

DITHER PATTERN B

| 147 | 90 | 210 | 40 | 119 | 9 | 229 | 117 | 39 | 178 |
|---|---|---|---|---|---|---|---|---|---|
| 30 | 228 | 129 | 76 | 221 | 167 | 87 | 189 | 70 | 15 |
| 53 | 158 | 3 | 181 | 51 | 106 | 19 | 140 | 246 | 203 |
| 237 | 198 | 101 | 255 | 149 | 208 | 235 | 45 | 161 | 108 |
| 123 | 69 | 37 | 134 | 23 | 68 | 123 | 84 | 217 | 5 |
| 16 | 168 | 223 | 90 | 202 | 165 | 192 | 31 | 176 | 129 |
| 247 | 112 | 185 | 58 | 243 | 12 | 98 | 250 | 59 | 224 |
| 82 | 4 | 145 | 31 | 120 | 155 | 48 | 139 | 110 | 197 |
| 203 | 220 | 102 | 234 | 66 | 212 | 182 | 227 | 24 | 87 |
| 70 | 49 | 159 | 193 | 135 | 91 | 8 | 75 | 158 | 247 |

COLUMN THINNING PATTERN

E O E O

COMPOSITE DITHER PATTERN

| 107 | 147 | 90 | 181 | 210 | 213 | 96 | 40 | 4 | 119 |
|---|---|---|---|---|---|---|---|---|---|
| 30 | 240 | 39 | 228 | 162 | 129 | 76 | 65 | 221 | 223 |
| 53 | 202 | 82 | 158 | 230 | 3 | 181 | 115 | 51 | 35 |
| 61 | 237 | 198 | 127 | 101 | 16 | 146 | 255 | 203 | 149 |
| 105 | 123 | 69 | 253 | 37 | 186 | 55 | 134 | 245 | 23 |
| 16 | 152 | 33 | 168 | 166 | 223 | 90 | 94 | 202 | 8 |
| 247 | 90 | 212 | 112 | 70 | 185 | 58 | 197 | 243 | 135 |
| 51 | 82 | 4 | 232 | 145 | 124 | 25 | 31 | 237 | 120 |
| 144 | 203 | 220 | 12 | 102 | 160 | 104 | 234 | 171 | 66 |
| 70 | 66 | 199 | 49 | 46 | 159 | 193 | 255 | 135 | 79 |

# FIG. 10A

```
START
  │
  ▼
OBTAIN MULTI-VALUE INPUT IMAGE ─── S1001
  │
  ▼
GENERATE COMPOSITE DITHER PATTERN ─── S1002
  │
  ▼
FORM DOT PATTERN BASED
ON EJECTION DATA ─── S1003
  │
  ▼
END
```

# FIG. 10B

```
S101 ─ INPUT FILE
            │
            ▼
S102 ─ GENERATE SEED FILE FOR EACH PASS,
       ALL LEVELS | (RANDOM ARRANGEMENT)
            │
            ▼
S103 ─ CALCULATE OPTIMAL ARRANGEMENT OF
       PRINTING STATES ACCORDING TO REPULSIVE
       POTENTIAL METHOD FOR EACH PASS
            │
            ▼
                              S104
           NO ◄── ALL PASSES COMPLETED?
S105 ─ NEXT PASS          │ YES
                          ▼
                              S106
           NO ◄── ALL LEVELS COMPLETED?
S107 ─ NEXT LEVEL         │ YES
                          ▼
S108 ─ OUTPUT MASK FILE OF ALL LEVELS
```

# FIG. 11

| CONDITION | FIRST PASS | SECOND PASS | THIRD PASS | FOURTH PASS | FIFTH PASS | SIXTH PASS |
|---|---|---|---|---|---|---|
| BLUE NOISE DITHER SYNCHRONIZED MASK | | | | | | |
| COMPOSITE DITHER SYNCHRONIZED MASK | | | | | | |

EP 4 535 226 B1

# F I G. 12

| 107 | 181 | 213 | 96 | 4 | 192 | 106 | 11 | 137 | 91 |
|---|---|---|---|---|---|---|---|---|---|
| 240 | 39 | 162 | 65 | 223 | 132 | 49 | 241 | 185 | 37 |
| 202 | 82 | 230 | 115 | 35 | 179 | 159 | 70 | 101 | 256 |
| 61 | 127 | 16 | 146 | 203 | 81 | 22 | 207 | 145 | 59 |
| 105 | 253 | 186 | 55 | 245 | 107 | 232 | 124 | 15 | 216 |
| 152 | 33 | 166 | 94 | 8 | 154 | 43 | 187 | 91 | 238 |
| 90 | 212 | 70 | 197 | 135 | 213 | 76 | 161 | 29 | 132 |
| 51 | 232 | 124 | 25 | 237 | 59 | 119 | 248 | 201 | 68 |
| 144 | 12 | 160 | 104 | 171 | 34 | 182 | 3 | 106 | 46 |
| 66 | 199 | 46 | 255 | 79 | 218 | 94 | 139 | 228 | 172 |

⋮

DITHER PATTERN A

BLOCK THINNING PATTERN

E O E O

⋯⋯⋯

| 147 | 90 | 210 | 40 | 119 | 9 | 229 | 117 | 39 | 178 |
|---|---|---|---|---|---|---|---|---|---|
| 30 | 228 | 129 | 76 | 221 | 167 | 87 | 189 | 70 | 15 |
| 53 | 158 | 3 | 181 | 51 | 106 | 19 | 140 | 246 | 203 |
| 237 | 198 | 101 | 255 | 149 | 208 | 235 | 45 | 161 | 108 |
| 123 | 69 | 37 | 134 | 23 | 68 | 123 | 84 | 217 | 5 |
| 16 | 168 | 223 | 90 | 202 | 165 | 192 | 31 | 176 | 129 |
| 247 | 112 | 185 | 58 | 243 | 12 | 98 | 250 | 59 | 224 |
| 82 | 4 | 145 | 31 | 120 | 155 | 48 | 139 | 110 | 197 |
| 203 | 220 | 102 | 234 | 66 | 212 | 182 | 227 | 24 | 87 |
| 70 | 49 | 159 | 193 | 135 | 91 | 8 | 75 | 158 | 247 |

⋮

DITHER PATTERN B

⇨

| 107 | 147 | 90 | 181 | 210 | 213 | 96 | 40 | 4 | 119 |
|---|---|---|---|---|---|---|---|---|---|
| 30 | 240 | 39 | 228 | 162 | 129 | 76 | 65 | 221 | 223 |
| 53 | 202 | 82 | 158 | 230 | 3 | 181 | 115 | 51 | 35 |
| 61 | 237 | 198 | 127 | 101 | 16 | 146 | 255 | 203 | 149 |
| 105 | 123 | 69 | 253 | 37 | 186 | 55 | 134 | 245 | 23 |
| 16 | 152 | 33 | 168 | 166 | 223 | 90 | 94 | 202 | 8 |
| 247 | 90 | 212 | 112 | 70 | 185 | 58 | 197 | 243 | 135 |
| 51 | 82 | 4 | 232 | 145 | 124 | 25 | 31 | 237 | 120 |
| 144 | 203 | 220 | 12 | 102 | 160 | 104 | 234 | 171 | 66 |
| 70 | 66 | 199 | 49 | 46 | 159 | 193 | 255 | 135 | 79 |

⋮

COMPOSITE DITHER PATTERN

EP 4 535 226 B1

# F I G. 13

## INDEX PATTERN

| | 0 | 1 | 2 | 3 |
|---|---|---|---|---|
| LEVEL1 | | | | |

| | 0 | 1 | 2 | 3 |
|---|---|---|---|---|
| LEVEL2 | | | | |

| | 0 | 1 | 2 | 3 |
|---|---|---|---|---|
| LEVEL3 | | | | |

| | 0 | 1 | 2 | 3 |
|---|---|---|---|---|
| LEVEL4 | | | | |

## RASTERIZATION TABLE

| 0 | 3 | 1 | 2 | 3 | 0 | 2 | 1 |
|---|---|---|---|---|---|---|---|
| 3 | 0 | 2 | 1 | 0 | 3 | 1 | 2 |
| 3 | 0 | 2 | 1 | 0 | 3 | 1 | 2 |
| 0 | 3 | 1 | 2 | 3 | 0 | 2 | 1 |
| 2 | 1 | 3 | 0 | 1 | 2 | 0 | 3 |
| 1 | 2 | 0 | 3 | 2 | 1 | 3 | 0 |
| 1 | 2 | 0 | 3 | 2 | 1 | 3 | 0 |
| 2 | 1 | 3 | 0 | 1 | 2 | 0 | 3 |

# F I G. 14

INDEX PATTERN

|  | 0 | 1 | 2 | 3 |
|---|---|---|---|---|
| LEVEL1 | | | | |
| LEVEL2 | | | | |
| LEVEL3 | | | | |
| LEVEL4 | | | | |

25%-Duty 8-bit MULTI-VALUE IMAGE

⇨

RASTERIZATION TABLE

| 0 | 3 | 1 | 2 | 3 | 0 | 2 | 1 |
|---|---|---|---|---|---|---|---|
| 3 | 0 | 2 | 1 | 0 | 3 | 1 | 2 |
| 3 | 0 | 2 | 1 | 0 | 3 | 1 | 2 |
| 0 | 3 | 1 | 2 | 3 | 0 | 2 | 1 |
| 2 | 1 | 3 | 0 | 1 | 2 | 0 | 3 |
| 1 | 2 | 0 | 3 | 2 | 1 | 3 | 0 |
| 1 | 2 | 0 | 3 | 2 | 1 | 3 | 0 |
| 2 | 1 | 3 | 0 | 1 | 2 | 0 | 3 |

⇨

BINARIZED IMAGE

E O E O E O E O E O E O E O E O

EP 4 535 226 B1

# FIG. 15

BINARIZED IMAGE

E O E O E O E O E O E O E O E O

COLUMN THINNING PATTERN

E O E O

......

FORWARD PRINT DATA

E O E O E O E O E O E O E O E O

BACKWARD PRINT DATA

E O E O E O E O E O E O E O E O

EP 4 535 226 B1

# F I G. 16

FORWARD PRINT DATA

COMPOSITE DITHER
PATTERN FOR CREATING

F I G. 17

DITHER PATTERN A

DITHER PATTERN B

COMPOSITE DITHER PATTERN

# F I G. 18

FIG. 19A

768 PIXELS

768 PIXELS

60

60a

FIG. 19B

60a

| 128 | 24 | 89 | 5 | 220 | 136 | 243 | 97 |
| 251 | 203 | 170 | 44 | 78 | 19 | 133 | 16 |
| 13 | 80 | 77 | 222 | 67 | 81 | 100 | 187 |
| 55 | 178 | 100 | 33 | 89 | 161 | 150 | 98 |
| 201 | 38 | 99 | 199 | 60 | 201 | 70 | 170 |
| 230 | 63 | 150 | 81 | 76 | 199 | 25 | 136 |
| 74 | 178 | 126 | 190 | 36 | 255 | 98 | 158 |
| 37 | 1 | 167 | 89 | 234 | 69 | 125 | 97 |

Y
X

# F I G. 20A

401

# F I G. 20B

402a    402b

# F I G. 20C

403

# F I G. 20D

404

# F I G. 21

384 PIXELS      384 PIXELS      768 PIXELS

~701a    ~701b    ~701c

702a    702b    702c

768 PIXELS      768 PIXELS      768 PIXELS

702a      702b      70

EP 4 535 226 B1

# F I G. 22A

In1(x,y)(K) ─────────────────────────────────────→ **803** QUANTIZATION PROCESSING UNIT → Out1 (x,y)

**804**

In2(x,y)(C) →
In3(x,y)(M) → CALCULATION UNIT
In4(x,y)(Y) →

Ofs_1 (x,y) → **805** ADDING UNIT

Dth'(x,y) →

**802** THRESHOLD OBTAINING UNIT

Dth(x,y)

# F I G. 22B

( INTER-COLOR PROCESSING )

| | |
|---|---|
| OBTAIN TONE DATA | S806 |
| CALCULATE THRESHOLD OFFSET VALUE Ofs | S807 |
| OBTAIN DITHER PATTERN THRESHOLD Dth | S808 |
| CALCULATE QUANTIZATION THRESHOLD Dth' FROM DITHER PATTERN THRESHOLD Dth AND THRESHOLD OFFSET VALUE Ofs | S809 |
| QUANTIZATION PROCESSING | S810 |

( END )

# F I G. 22C

( START )

| | |
|---|---|
| GENERATE COMPOSITE DITHER PATTERN | S891 |
| INTER-COLOR PROCESSING | S892 |
| GENERATE PRINT DATA | S893 |

( END )

# F I G. 23

EP 4 535 226 B1

# FIG. 24

BLACK 51001

CYAN 51002

BLACK_FORWARD

BLACK_BACKWARD

CYAN_FORWARD

CYAN_BACKWARD

51003 51007

51004 51008

51005

51006

NO POSITIONAL SHIFT POSITIONAL SHIFT

FIG. 25

1101a  1101b      1102a  1102b

BLACK_FORWARD     BLACK_BACKWARD     CYAN_FORWARD     CYAN_BACKWARD

1102     1106      1103     1107      1104     1105

NO POSITIONAL SHIFT     POSITIONAL SHIFT

# F I G. 26

1200a 1200b

BLACK

1201

YELLOW

1202

YELLOW_FORWARD

1203

YELLOW_BACKWARD

1204

POSITIONAL SHIFT

1205

NO POSITIONAL SHIFT

1206

# F I G. 27

Pt.0    Pt.1

LEVEL 0

LEVEL 1

LEVEL 2

FIG. 28

DITHER PATTERN A

DITHER PATTERN B

COMPOSITE DITHER PATTERN

# F I G. 29

# F I G. 30A

MULTI-VALUE INPUT IMAGE

×

COMPOSITE DITHER PATTERN

| 107 | 147 | 181 | 90 | 213 | 210 | 96 | 40 |
|---|---|---|---|---|---|---|---|
| 30 | 240 | 228 | 39 | 129 | 162 | 76 | 65 |
| 202 | 53 | 82 | 158 | 230 | 3 | 115 | 181 |
| 237 | 61 | 198 | 127 | 101 | 16 | 255 | 146 |
| 105 | 123 | 253 | 69 | 186 | 37 | 55 | 134 |
| 16 | 152 | 168 | 33 | 223 | 166 | 90 | 94 |
| 90 | 247 | 212 | 112 | 70 | 185 | 197 | 58 |
| 82 | 51 | 4 | 232 | 145 | 124 | 31 | 25 |

QUANTIZATION

| 1 | 1 | 1 | 1 | 1 | 1 | 1 | 1 |
|---|---|---|---|---|---|---|---|
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |
| 1 | 1 | 1 | 1 | 1 | 1 | 1 | 1 |

# F I G. 30B

□ : DITHER PATTERN A ASSIGNMENT REGION

□ : DITHER PATTERN B ASSIGNMENT REGION

● : FORWARD PASS MASK

# F I G. 30C

INDEX PATTERN

Pt.0　Pt.1

LEVEL 0

LEVEL 1

LEVEL 2

COMPARI-SON

IRASTERIZATION TABLE

| 1 | 1 | 1 | 1 | 1 | 1 | 0 | 1 |
|---|---|---|---|---|---|---|---|
| 0 | 0 | 0 | 0 | 0 | 0 | 0 | 1 |
| 0 | 1 | 1 | 1 | 0 | 0 | 1 | 1 |
| 1 | 1 | 0 | 0 | 0 | 0 | 1 | 1 |
| 0 | 0 | 0 | 0 | 0 | 0 | 1 | 1 |
| 1 | 1 | 1 | 1 | 0 | 0 | 1 | 1 |
| 0 | 1 | 1 | 1 | 1 | 1 | 1 | 1 |
| 1 | 1 | 0 | 0 | 1 | 0 | 0 | 0 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4519876 B
- JP 2007015359 A
- JP H946522 A
- EP 1710086 A2
- US 20080123148 A1
- JP 4280732 B